Europäisches Patentamt

European Patent Office

Office européen des brevets

(11) Veröffentlichungsnummer: **0 219 035**

**A2**

(12) **EUROPÄISCHE PATENTANMELDUNG**

(21) Anmeldenummer: **86113846.9**

(22) Anmeldetag: **07.10.86**

(51) Int. Cl.⁴: **C07C 85/20** , C08G 18/10 , C08G 18/50 , C08G 18/46 , C08G 18/38

(30) Priorität: **18.10.85 DE 3537116**
**19.04.86 DE 3613249**

(43) Veröffentlichungstag der Anmeldung:
**22.04.87 Patentblatt 87/17**

(84) Benannte Vertragsstaaten:
**AT BE CH DE ES FR GB IT LI NL SE**

(71) Anmelder: **BAYER AG**
**Konzernverwaltung RP Patentabteilung**
**D-5090 Leverkusen 1 Bayerwerk(DE)**

(72) Erfinder: **Rasshofer, Werner, Dr.**
**Leopold-Gmelin-Strasse 31**
**D-5000 Köln 80(DE)**
Erfinder: **König, Klaus, Dr.**
**Zum Hahnenberg 40**
**D-5090 Leverkusen 1(DE)**
Erfinder: **Meiners, Hans-Joachim, Dr.**
**Ringstrasse 25**
**D-5090 Leverkusen 1(DE)**
Erfinder: **Grögler, Gerhard, Dr.**
**von-Diergardt-Strasse 48**
**D-5090 Leverkusen 1(DE)**

(54) **Verfahren zur Herstellung von Polyaminen und deren Verwendung zur Herstellung von Polyurethanen.**

(57) Die Erfindung betrifft ein Einstufenverfahren zur Herstellung von Polyaminen mit primären Aminogruppen, vorzugsweise aromatischen Aminogruppen, durch Hydrolyse von endständige Isocyanatgruppen aufweisenden Verbindungen mit einem NCO-Gehalt von 0,5 bis 40 Gew.-% mit 0,75 bis 50 Molen Wasser pro Äquivalent NCO-Gruppen gegebenenfalls in Gegenwart von höchstens 1 Gew.-% eines nicht einbaufähigen basischen und/oder Metallkatalysatoren in Carbonsäureamiden als organische Lösungsmittel, bevorzugt in Dimethylformamid, bei bestimmten Gew.-Verhältnissen von Wasser zu Carbonsäureamiden, Wasser zu NCO-Gehalt sowie Carbonsäureamiden zu NCO-Verbindung, in vorzugsweise homogener Lösung bei wenigstens 20°C. Als Isocyanatgruppen aufweisende Verbindungen werden modifizierte (bevorzugt Urethanmodifizierte) Polyisocyanate oder insbesondere NCO-Prepolymere eingesetzt. Die erfindungsgemäße Hydrolyse führt unter Kohlendioxidabspaltung direkt zu den Polyaminen, die nach üblichen Methoden isoliert werden können, wobei vorzugsweise auf die Abtrennung der geringen Katalysatormengen verzichtet werden kann.

Die Erfindung betrifft auch die Verwendung der erfindungsgemäßen Polyamine zur Herstellung von Polyurethan(harnstoff)en.

## Verfahren zur Herstellung von Polyaminen und deren Verwendung zur Herstellung von Polyurethanen

Es ist bekannt, daß aromatische Isocyanate durch saure Hydrolyse in primäre aromatische Amine überführt werden können. Die Reaktion verläuft allerdings nur sehr unvollständig, da das bei der Hydrolyse gebildete Amin mit noch nicht umgesetztem Isocyanat zum entsprechenden Harnstoff weiterreagiert. Diese Folgereaktion läßt sich auch durch Anwendung überschüssiger starker Mineralsäure nicht unterdrücken. Ein Beispiel für diese Verfahrensweise findet sich in der JP-PS 55 007 829.

Gleichfalls ist bekannt, daß Isocyanate durch saure oder basische Katalyse in Amine umgewandelt werden können, wie z.B. in N.V. Sidgwick, The Organic Chemistry of Nitrogen, Clarendon Press, Oxford, S. 326 (1966) sowie in J. March, Advanced Organic Chemistry: Reactions, Mechanismus and Structure, Mc Graw-Hill Book Co., New York, S. 658 (1968), belegt wird. Dabei gibt Sidgwick einen Hinweis auf die alkalische Hydrolysierbarkeit von NCO-Gruppen, der jedoch völlig unspezifisch und allgemein gehalten ist. J. March spricht allgemein davon, daß die Hydrolyse von Isocyanaten und Isothiocyanaten zu Aminen mit Säuren und Basen katalysiert werden kann. Dem Fachmann ist auch das intermediäre Auftreten von Isocyanaten, z.B. beim sogenannten Curtius-oder Lossen-Abbau von Säureaziden und Hydroxamsäuren und deren Zersetzung mit wäßriger Säure zu Aminsalzen, bekannt. Ein solches präparatives Vorgehen ist z.B. in Organic Synthese, Coll. Voll. IV, 819 (1963) am Beispiel der Herstellung von Putrescin-Hydrochlorid beschrieben.

Von E. Mohr, J. prakt. Chem., 71, 133 (1905) stammt die Beobachtung, daß Phenylisocyanat in der Kälte von verdünnter Natronlauge schneller angegriffen wird als von Wasser. Von C. Naegeli et al., Helv. Chim. Acta, 21, 1100 (1938) wird berichtet, daß man aus mit Elektronen-Akzeptoren wie Nitrogruppen, Halogenatomen oder Acylgruppen substituierten Phenylioscyanaten durch Hydrolyse in feuchtem Ether oder 1 % Wasser enthaltendem Aceton, also bei Abwesenheit von Säuren oder Basen, in wenige Minuten bis zu 1 Stunde während Umsetzung die entsprechenden Monoamine erhält. Aus 2,4-Dinitrophenylisocyanat erhält man das entsprechende Amin auch ohne Lösungsmittel in heißem Wasser in praktisch 100 %iger Ausbeute und ohne Nebenreaktion durch Harnstoffbildung.

In der DE-B 1 270 046 wird ein Verfahren zur Herstellung definierter, Polyalkylenglykolether-Segmente enthaltender, primärer aromatischer Amine beschrieben, bei dem man Umsetzungsprodukte von aromatischen Di-oder Triisocyanaten mit Polyalkylenglykolethern und/oder Polyalkylenglykolthioethern, vorzugsweise solchen mit Molekulargewichten zwischen 400 und 4000, mit sekundären oder tertiären Carbinolen umsetzt und anschließend (gegebenenfalls in Gegenwart saurre Katalysatoren) in einem inerten Lösungsmittel einer thermischen Spaltung bei hohen Temperaturen unterwirft. Nachteilig ist, daß neben der hohen Spalttemperatur im Verlauf der thermischen Spaltung der Urethane brennbare, leicht flüchtige Alkene entstehen, die im Gemisch mit Luft explosiv sind, so daß entsprechende Vorsichtsmaßnahmen getroffen werden müssen.

Gegenstand der DE-B 1 694 152 (US 3 525 871) ist die Herstellung von mindestens 2 endständige Aminogruppen aufweisenden Prepolymeren durch Umsetzung von Hydrazin, Aminophenylethylamin oder anderen Diaminen mit einem NCO-Prepolymer aus eine Polyetherpolyol und Polyisocyanat (NCO : NH-Verhältnis = 1:1,5 bis 1:5). Nicht umgesetztes Amin muß dabei in einem weiteren Schritt sorgfältig entfernt werden, da es die Umsetzung mit Polyisocyanaten stark katalysiert, so zu kurzen Verarbeitungszeiten führt und auch selbst als Reaktionspartner auftritt. Ein ähnliches Verfahren wird in der US-PS 3 931 116 beschrieben.

Eine andere Synthesemöglichkeit für Urethangruppen aufweisende Polyamine wird in der FR-PS 1 415 317 beschrieben. Urethangruppenhaltige NCO-Prepolymere werden mit Ameisensäure in die N-Formylderivate überführt, die zu enständigen aromatischen Aminen verseift werden. Auch die Reaktion von NCO-Prepolymeren mit Sulfaminsäure gemäß DE-PS 1 155 907 führt zu Verbindungen mit endständigen Aminogruppen. Desweiteren werden höhermolekulare, aliphatische, sekundäre und primäre Aminogruppen auweisende Voradukkte nach DE-B 1 215 373 durch Umsetzung höhermolekularer Hydroxylverbindungen mit Ammoniak in Gegenwart von Katalysatoren unter Druck bei hohen Temperaturen erhalten oder sind gemäß US-PS 3 044 989 durch Umsetzung höhermolekularer Polyhydroxylverbindungen mit Arylnitril unter anschließender katalytischer Hydrierung zugänglich. Auch durch Umsetzung von NCO-Prepolymeren mit Hydroxylgruppen aufweisenden Enaminen, Aldiminen oder Ketiminen und anschließende Hydrolyse erhält man gemäß DE-A 2 546 536 bzw. US-PS 3 865 791 höhermolekulare, endständige Aminogruppen und Urethangruppen aufweisende Verbindungen. Eine weitere Synthesemöglichkeit für Urethan-und Ethergruppen aufweisende aroamtische Polyamine liegt in der bei der Reaktion von Isatosäureanhydrid und Diolen eintretenden Ringöffnung. Solche Polyamine sind z.B. beschrieben in der US-PS 4 180 644 und den DE-A 2 019 432, 2 619 840, 2 648 774 und 2 648 825. Nachteilig für viele Zwecke ist die geringe Reaktivität der solcherart erhaltenen, aromatischen Esteramine.

Geringe Reaktivität weisen auch die Amino-und Estergruppen enthaltenden Verbindungen auf, die nach US-PS 4 504 648 durch Umsetzung von Polyetherpolyolen mit p-Aminobenzoesäureethylester und nach EP32 547 durch Umsetzung von Polyolen mit Nitrobenzoesäurechlorid und nachfolgender Reaktion der Nitrogruppen zu Aminogruppen erhältlich sind.

Auch die Reaktion von Nitroarylisocyanaten mit Polyolen und nachfolgender Reduktion der Nitrogruppe zu aromatischen Amingruppen ist bekannt - (US-PS 2 888 439).

Nachteilig sind hier vor allem die hohen Kosten des Reduktionsschrittes.

Es ist auch bekannt, daß gewisse heteroaromatische Isocyansäureester durch basische Hydrolyse in heteroaromatische Amine überführt werden können. Die bei H.John, J. Prakt. Chemie 130, 314 ff bzw. 332 ff (1931) für zwei ganz bestimmte, heteroaromatische Monoisocyansäureester genannten Hydrolysebedingungen sind aber für die Überführung von Poly-NCO-Verbindungen in aliphatische und/oder aromatische Amine nicht nur völlig ungeeignet, sondern darüber hinaus auch gefährlich.

Gegenstand weiterer Vorschläge nach den DE-A 2 948 419 und 3 039 600 sind mehrstufige Verfahren zur Herstellung von Polyaminen durch Hydrolyse von NCO-Voraddukten, wobei die NCO-Gruppen der Voraddukte in Gegenwart eines Überschuß an Basen (Alkalihydroxide) bei niedrigen Temperaturen zu Carbamaten reagieren, die durch Ansäuern mit äquivalenten oder überschüssigen Mengen an Mineralsäuren oder sauren Ionenaustauscherharzen zersetzt und gegebenenfalls nach Neutralisation überschüssiger Säuremengen mittels Basen die Polyamine isoliert werden.

In der DE-OS 3 131 252 wurde vorgeschlagen, die in einer ersten Stufe durch Hydrolyse mit Alkalihydroxiden hergestellten Carbamate durch anschließende thermische Behandlung zu zersetzen, um so zu Polyaminen zu gelangen.

Einstufenverfahren beschreiben die DE-OS 3 223 400/EP-97 299, DE-OS 3 223 398/EP-97 298 und DE-OS 3 223 397/ EP-97 290. Nach diesen Einstufen-Hydrolyseverfahren werden (in DE-OS 3 223 400) "Etherlösungsmittel" zusammen mit tertiären Aminen als Katalysatoren; (in DE-OS 3 223 398) polare Lösungsmittel wie Dimethylformamid zusammen mit tertiären Aminen oder größeren Mengen an Alkalihydroxiden, Alkalisilikaten, Alkalicyaniden als Katalysatoren in bestimmten Mengen; oder (in DE-OS 3 223 397) Carbonate oder Carboxylate in bestimmten Mengen als Katalysatoren in polaren Lösungsmittel wie DMF verwendet.

Die hier beschriebenen Verfahren zur Herstellung von Polyaminen sind alle mehr oder weniger aufwendig. Selbst bei den zuletzt genannten Einstufenverfahren sind noch weitere entscheidende Vereinfachungen wünschenswert, um die Polyaminen in wirtschaftlich noch günstigerer Weise, in noch besseren Konversionsraten $NCO/NH_2$ (d.h. höhere $NH_2$-Zahlen) und in noch glatterer Reaktion zu bekommen. Gegenüber herkömmlichen Verfahren sollten folgende vorteilhafte Verfahrensmerkmale erreicht werden, wie daß

keine Filtration nötig ist,

daß keine destillative Abtrennung eines tert.-Amin-Katalysators nötig ist,

daß man eine drastische Verringerung der notwendigen Katalysatormenge erreicht, so daß der Katalysator im Polyamin verbleiben kann. Dies betrifft sowohl die Reduzierung der Menge an tertiären Aminen (nach DE-OS 3 223 398) wie auch der der anorganischen, alkalischen Verbindungen wie KOH, die als Katalysatoren verwendet werden,

Außerdem soll erreicht werden, daß eine möglichst quantitative Umwandlung von NCO in $NH_2$-Gruppen (hohe Konversionsrate $NCO/NH_2$, d.h. möglichst hohe, dem theoretischen Wert nahekommende Aminzahl) erfolgt,

daß keine Nebenprodukte anfallen, die entsorgt werden müssen, und

daß eine einfache Aufarbeitung der Polyamine bzw. Hilfsstoffe möglich ist.

Völlig überraschend wurde gefunden, daß diese und weitere Vorteile dann erreicht werden können, wenn die einstufige Hydrolyse von Polyisocyanaten zu Polyaminen

unter Einhaltung bestimmter Wasser/NCO-Verhältnisse

und bestimmter Lösungsmittel/Wasser-Gewichtsverhältnisses,

unter Verwendung von wasserlöslichen Carbonsäureamiden oderLactamen als Lösungsmittel,

oder unter Verwendung höchstens minimaler ($\leq 1$ Gew.-%) Katalysatormengen und

unter Einhaltung homogener Lösungsbedingungen vorgenommen wird. Bei diesen Bedingungen ist es sogar möglich, die Hydrolyse bei niedrigen Temperaturen durchzuführen.

Entsprechend dem erfindungsgemäßen Verfahren werden wasserlösliche, organische Lösungsmittel wie Carbonsäureamide bevorzugt Carbonsäuredialkylamide oderLactame eingesetzt, um eine homogene Lösung aller Reaktionsteilnehmer und des Katalysators zu erzielen. Besonders geeignete Lösungsmittel sind Dimethylformamid und Dimethylacetamid, besonders bevorzugt wird Dimethylformamid eingesetzt.

Es ist aus der DE-AS 1 235 499 bekannt, Lösungen von NCO-Prepolymeren in Dimethylformamid mit etwa äquivalenten Mengen an Wasser - (80 bis 120 % der Theorie, wobei 100 % der Theorie hier 1/2 Mol Wasse pro NCO entspricht; d.h. Wasser wirkt hier mit 2 Hydroxyl-Äquivalenzen) unter Kettenverlängerung über Harnstoffgruppen in hochviskose Lösungen, welcher zur Erspinnung von Elasthanfäden oder für Beschichtungen geeignet sind, zu überführen. Die hiervon unterschiedliche Reaktion der NCO-Verbindungen mit überschüssigen Mengen an Wasser unter Bildung niedermolekularer Amine in hohen Ausbeuten war überraschend, insbesondere deshalb, weil die Hydrolyse auch in Gegenwart von NCO-Umsetzungen mit den sich bildenden Reaktionsprodukten beschleunigenden Katalysatoren stattfindet.

Ferner ist es bekannt, daß Isocyanate mit Dialkylformamiden zu Formamidinen reagieren (H. Ulrich et al, J. Org. Chem. 33, 3928-3930 (1968) und dort zitierte Literatur). Auch diese Reaktion stört nicht bei der glatten Hydrolysereaktion zu den Polyaminen nach dem erfindungsgemäßen Verfahren.

Ein erheblicher Vorteil des erfindungsgemäßen Verfahrens wird darin gesehen, daß bei einem Einsatz eines Katalysators die Menge so gering ist, daß Katalysator-oder Umsetzungsprodukte des gebildeten $CO_2$ mit den Katalysatoren (wie z.B. $KHCO_3$ und $K_2CO_3$ ), nicht abfiltriert werden müssen.

Da alle einsetzbaren Katalysatoren im Reaktionsmedium gut löslich sind, bestehen keine Verteilungsungleichgewichte wie bei der Verwendung von rasch sedimentierenden Alkalicarbonaten oder -Hydrogencarbonaten, die entsprechend der DE-OS 3 223 297 vorliegen können. Da sie in Lösung bleiben, bzw. voll mischbar sind, müssen sie auch nicht abfiltriert werden. Die im Endprodukt verbleibenden Katalysatoren stören im Regelfall wegen der sehr geringen Mengen, wie sie bevorzugt verwendet werden, nicht. Da nach Aufarbeitung keine Salze oder Katalysatorreste entfernt werden müssen, ist diese Methode auch besonders für die Herstellung von hochviskosen oder festen Aminogruppen aufweisenden Verbindungen geeignet, aus denen bisher ungelöstes, restliches Salz oder Katalysatormaterial nur sehr aufwendig entfernt werden konnte.

Die erfindungsgemäße Hydrolyse ist auch besonders gut für die Hydrolyse von NCO-Prepolymeren auf Basis von Polyestern geeignet, da die - schonenden Reaktionsbedingungen kaum zu einer Spaltung der Estergruppen führen.

Von allen bisher bekannten Hydrolyse-Verfahren, bei denen Aminopolyester durch basische Hydrolyse der entsprechenden NCO-Vorstufen gewonnen werden, stellt das erfindungsgemäße Verfahren daher die schonenste Methode dar.

Gegenstand der Erfindung ist ein Einstufenverfahren zur Herstellung von Polyaminen mit primären Aminogruppen durch Hydrolyse von NCO-Gruppen aufweisenden Verbindugen in Wasser enthaltenden Medien, gegebenenfalls unter Zusatz basischer und/oder Metallkatalysatoren, das dadurch gekennzeichnet ist, daß man

a) NCO-Gruppen, vorzugsweise aromatisch gebundene NCO-Gruppen, aufweisende Verbindungen mit einem NCO-Gehalt von 0,5 bis 40 Gew.-%, vorzugsweise NCO-Prepolymere auf einen NCO-Gehalt von 1,2 bis 25 Gew.-%, oder modifizierten Polyisocyanaten mit einem NCO-Gehalt von 1,5 bis 20,5 Gew.-%,

b) mit 0,75 bis 50, bevorzugt 1 bis 35, besonders 1,25 bis 12 und besonders bevorzugt mit 1,5 bis 7,5, Mol Wasser pro Äquivalent NCO der Komponente a),

c) in Gegenwart von 0 bis 1 Gew.-%, vorzugsweise 0,00005 bis 1 Gew.-% nicht einbaufähiger basischer und/oder Metall-Katalysatoren, bezogen auf 100 Gew.-% der Komponente a), besonders bevorzugt 0,0001 bis 0,099 Gew.-% nicht einbaufähiger basischer Katalysatoren,

d) und in Gegenwart von ≥ 10 Gew.-%, bezogen auf 100 Gew.-% der Komponent a) von Carbonsäureamiden, vorzugsweise Carbonsäuredialkylamiden als Lösungs mittels, besonders bevorzugt Dimethylformamid oder Dimethylacetamid,

e) und gegebenenfalls in Gegenwart von 0,1 bis 5 Gew.-%, bezogen auf 100 Gew.-% der Komponente a), einer Verbindung mit mindestens einer, an aliphatische, cycloaliphatische oder aromatische Reste gebundenen Hydroxy-und/oder Amino-und/oder Thiolgruppe,

wobei

f) ein Lösungsmittel (d)/Wasser-Gewichtsverhältnis von 3 bis 200, bevorzugt 5 bis 150, besonders bevorzugt ≥10 bis 100 und insbesondere ≥25 bis 75,

g) und eine homogene Reaktionsphase aufrecht erhalten werden, bei einer Temperatur von 20 und 210°C, bevorzugt 35-165°C, insbesondere 40 bis 150°C, besonders bevorzugt 80 bis 130°C, hydrolysiert.

Bei einer bevorzugten Ausführungsform des erfindungsgemäßen Verfahrens wird die Komponente a) in Gegenwart von nicht einbaufähigen, d.h. keine mit NCO-Gruppen reaktive Gruppen aufweisen, Katalysatoren wie

$c\alpha$) 0,0001 bis 0,099, vorzugsweise 0,002 bis 0,08 Gew.-%, bezogen auf 100 Gew.-% der Komponente a), Alkalihydroxide, Erdalkalihydroxide, Tetraalkylammoniumhydroxide, Alkalialuminate, Alkaliphenolate, Alkali-thiophenolate, Alkali-mercaptide, Alkali-hydrogensulfide, löslichen Alkali-und Erdalkalisalze der (Iso)(Thio)cyansäuren und Alkali-$\beta$-diketon-enolate

und/oder

$c\beta$) 0,0001 bis 0,099, vorzugsweise 0,002 bis 0,08 Gew.-%, bezogen auf 100 Gew.-% der Komponente a), Carbonate oder Hydrogencarbonate von Alkalimetallen

und/oder

$c\gamma$) 0,001 bis 0,099, vorzugsweise 0,0001 bis 0,0099, besonders bevorzugt 0,0002 bis 0,008 Gew.-% an Alkali-und Erdalkalisalze von organischen Carbonsäuren

als basische Katalysatoren c) hydrolysiert.

Eine weitere bevorzugte Ausführungsform des erfindungsgemäßen Verfahrens ist dadurch gekennzeichnet, daß man die NCO-Komponente a)

mit

b) 1,25 bis 12, vorzugsweise 1,5 bis 7,5 Mol Wasser pro NCO-Äquivalent

c) unter Mitverwendung der basischen Katalysatoren $c\alpha$), $c\beta$) und/oder $c\gamma$) in den genannten Mengen

d) unter gleichzeitiger Aufrechterhaltung eines Carbonsäuredialkylamid (vorzugsweise Dimethylformamid)/ Wasser-Gewichtsverhältnisses von ≧10 bis 150, bevorzugt ≧25 bis 75, bei Temperaturen von 35 bis 165°C, bevorzugt 80 bis 130°C hydrolysiert.

Eine weitere Durchführungsform des erfindungsgemäßen Verfahren ist dadurch gekennzeichnet, daß man die NCO-Komponente a) in Gegenwart von

$c\delta$) 0,0001 bis 0,99 Gew.-%, vorzugsweise 0,001 bis 0,099 Gew.-% einer tertiären Aminverbindungen, bezogen auf 100 Gew.-% der Komponente a), bei Einhaltung eines Wasser/NCO-Verhältnisses von 1 bis 7,5 Mol Wasser pro Äquivalent NCO und eines Dialkylcarbonsäureamid/Wasser - (vorzugsweise Dimethylformamid/Wasser)- Gewichtsverhältnisses von ≧10 bis 150, vorzugsweise ≧25 bis 75, bei einer Temperatur von 35 bis 165°C hydrolysiert.

Insbesondere wird das erfindungsgemäße Verfahren in der Weise ausgeführt, daß man 0,0001 bis 0,099 Gew.-% tertiärer Aminverbindungen unter Einhaltung eines Wasser/NCO-Verhältnisses von 1 bis 24 Mol Wasser pro Äquivalent NCO und eines Dialkylcarbonsäureamid/Wasser-(bevorzugt Dimethylformamid/Wasser)-Gewichtsverhältnisses von ≧10 bis 50 bei einer Temperatur von 35 bis 165°C hydrolysiert.

Eine weitere Ausführungsform des erfindungsgemäßen Verfahrens ist dadurch gekennzeichnet, daß man die NCO-Komponente a)

$c\epsilon$) in Gegenwart von 0,0001 bis 0,0099, vorzugsweise 0,002 bis 0,008 Gew.-%, bezogen auf 100 % der Komponente a) an Metallkatalysatoren, mit vorzugsweise 1,5 bis 7,5 Molen Wasser pro NCO-Äquivalent und unter gleichzeitiger Einhaltung eines Carbonsäuredialkylamid/Wasser (vorzugsweise Dimethylformamid/Wasser)-Gewichtsverhältnisses von ≧10 bis 50, vorzugsweise ≧25 bis 50, bei Temperaturen von ≧35 bis 165°C hydrolysiert.

Eine weitere Durchführungsform des erfindungsgemäßen Verfahrens ist dadurch gekennzeichnet, daß man die NCO-Komponente a) ohne Katalysator c) bei einem Wasser/NCO-Verhältnis von 1 bis 25 Mol Wasser pro Äquivalent NCO und einem Carbonsäuredialkylamid/Wasser (vorzugsweise Dimethylformamid/Wasser)-Gewichtsverhältnis von ≧10 bis 50, bevorzugt ≧25 bis 50, bei Temperaturen von 35 bis 165°C, gegebenenfalls unter Druck, hydrolysiert.

Es ist bevorzugt, daß man bei den verschiedenen Ausführungsformen des Verfahrens als NCO-Komponente a) NCO-Prepolymere mit einem NCO-Gehalt von 1,5 bis 10 Gew.-% oder modifizierte Polyisocyanate, insbesondere Urethan-modifizierte Polyisocyanate mit einem NCO-Gehalt von 1,5 bis 20,5 Gew.-%, insbesondere 5 bis 20,5 Gew.-% bevorzugt einsetzt. Es ist auch möglich, bei den Verfahren Neutralsalze während der Hydrolyse mitzuverwenden. Erfindungsgemäß ist ferner bevorzugt 1 bis 35, insbesondere 1,25 bis 12 Äquivalente Wasser pro Äquivalent NCO in der NCO-Komponente a) verwendet werden.

Vorzugsweise wird als Komponente d) Dimethylformamid in Mengen von 100 bis 1000 Gew.-%,

bezogen auf 100 Gew.-% NCO-Komponente a), verwendet.

Die Hydrolyse wird bevorzugt bei Temperaturen von 40 bis 150, besonders bevorzugt bei 80 bis 130°C und bevorzugt drucklos durchgeführt. Als Feststoffkonzentration des Hydrolysenansatzes wird im allgemeinen eine Konzentration von 20 bis 75 Gew.-%, vorzugsweise 25 bis 60 Gew.-%, insbesondere 30 bis 55 Gew.-% gewählt. Es sind zwar noch niedrigere Feststoffkonzentrationen gleichfalls möglich, doch aus praktischen Gründen (Wiederaufarbeitung der Lösungsmittel d) nicht bevorzugt.

Als Komponente a) werden insbesondere NCO-Prepolymere mit einem Gehalt von 0,5 bis 40, bevorzugt 1,2 bis 25, besonders bevorzugt 1,5 bis 10 Gew.-%, an aromatisch gebundenen NCO-Gruppen auf Basis von höhermolekularen, di-oder höherfunktionellen Polyether-, Polyester-, Polycaprolacton-und Polycarbonat-Polyolen und Diisocyanaten eingesetzt oder mit niedermolekularen Di-oder Polyolen (Molekulargewicht bis 399) modifizierte Di-oder Polyisocyanate mit 1,5 bis 20,5 Gew.-%, vorzugsweise 5 bis 20,5 Gew.-% NCO, eingesetzt.

Die Erfindung betrifft auch die nach den erfindungsgemäßen Verfahren erhaltenen Polyamine, vorzugsweise solche, die 0,46 bis 9,52 Gew.-% primäre, vorzugsweise aromatisch gebundene NH$_2$-Gruppen aufweisen.

Ein weiterer Gegenstand der Erfindung sind auch Verfahren zur Herstellung von gegebenenfalls zellförmigen Polyurethan(harnstoff)en durch Umsetzung der erfindungsgemäß erhaltenen Polyamine A, mit

B) Polyisocyanaten sowie gegebenenfalls

C) weiteren Verbindungen mit gegenüber Isocyanaten reaktiven Gruppen, gegebenenfalls

D) in Anwesenheit an sich bekannter Hilfs-und Zusatzstoffe und/oder Lösungsmittel.

Erfindungsgemäß können gegebenenfalls untergeordnete Mengen von 0,1 bis 5 Gew.-% einer Verbindung e), bezogen auf 100 Gew.-% Komponente a), mit mindestens einer an aliphatische, cycloaliphatische oder aromatische Reste gebundenen Hydroxy-und/oder Amino-und/oder Thiolgruppen mitverwendet werden. Die Mitverwendung dieser "H-aktive Gruppen" enthaltenden Verbindungen führt zu folgenden Vorteilen: Aus niedermolekulare Polyisocyanate enthaltenden NCO-Verbindungen, z.B. NCO-Semiprepolymeren, lassen sich ohne Behandlung der NCO-Verbindungen durch Dünnschichten oder ähnliche Verfahren Polyamine herstellen, die praktisch frei von monomerem Polyamin sind. Es lassen sich so in einfacher Weise und ohne weiteren Reaktionsschritt auch modifizierte Polyamine, die in einem Molekül zusätzlich über Urethangruppen, Thiorethangruppen oder Harnstoffgruppen verknüpfte Polyaminsegmente, gegebenenfalls unterschiedlicher Art, besitzen, herstellen.

Aus einer z.B. difunktionellen NCO-Verbindung läßt sich durch Verwendung einer tri-oder höherfunktionellen, "H-aktive Gruppen" besitzenden Verbindung bei der NCO-Hydrolyse so ein tri-oder höherfunktionelles Polyamin gewinnen.

Die zwei oder mehrere, aromatische, heterocyclische und/oder aliphatische, vorzugweise aromatische, NCO-Gruppen aufweisenden, im erfindungsgemäßen Verfahren einsetzbaren NCO-Verbindungen a), im folgenden auch kurz "NCO-Verbindungen" genannt), stellen entweder modifizierte Polyisocyanate dar, wie sie durch teilweise Umwandlung der Isocyanatgruppen in Urethan-, Harnstoff-, Biuret-, Uretdion-, Isocyanurat-und/oder Uretonimingruppen entstehen, oder sind sogenannten NCO-Prepolymere aus gegenüber NCO-Gruppen reaktive H-Gruppen tragenden, mehrwertigen Verbindungen des Molekulargewichts 62 bis 12000, vorzugsweise 400 bis 6000, und (überschüssigen) Mengen an aromatischen Polyisocyanaten oder sind gegebenenfalls (weniger bevorzugt) Semiprepolymere aus NCO-Prepolymeren und zusätzlichen niedermolekularen Polyisocyanaten.

Als modifizierte aromatische Polyisocyanate sind beispielsweise geeignet:

Urethangruppen-haltige Polyisocyanate (durch Modifizierung mit niedermolekularen Polyolen entstanden), Harnstoffgruppen aufweisende Polyisocyanate (z.B. durch Wassermodifizierung, DE-PS 1 230 778), Biuretgruppen aufweisende Polyisocyanate (US-PS 3 124 605, 3 201 372, GB-PS 889 050), Isocyanuratgruppen aufweisende Polyisocyanate (DE-PS' en 1 022 789 und 1 222 067) sowie Uretdion-oder Uretonimingruppen enthaltende, dimere oder oligomere Polyisocyanate. Es sind dies bekannte Verbindungen oder nach bekannten Verfahren zugänglich. Eine Reihe solcher Uretdionpolyisocyanate ist in Analytical Chemistry of the Polyurethanes, Band 16/III, High-Polymers-Series - (Wiley 1969) aufgeführt.

Solche modifizierten Polyisocyanate mit Urethan-und/oder Harnstoff-und/oder Biuret-und/oder Uretdion-und/oder Isocyanurat-und/oder Uretonimin-Gruppen, wie sie im erfindungsgemäßen Verfahren einsetzbar sind, haben üblicherweise einen NCO-Gehalt von 1,5 bis 20,5 Gew.-%, bevorzugt 5 bis 20,5 Gew.-%. Besonders bevorzugt sind hierbei urethangruppenhaltige Polyisocyanate (durch Modifizierung mit niedermolekularen (Molekulargewichte 62 bis 399)) Di-und/oder Polyolen), mit NOC-Gehalten von ≧1,5 bis 20,5 Gew.-%, bevorzugt 5 bis 20,5 Gew.-%.

Die im erfindungsgemäßen Verfahren einzusetzenden NCO-Verbindungen a) sind besonders jedoch NCO-Prepolymere, wie sie in an sich bekannter Weise durch Umsetzung von niedermolekularen und/oder höhermolekularen Hydroxy-und/oder Amino-und/oder Thiolgruppen als reaktive Gruppen enthaltenden Verbindungen (Molekulargewicht 62 bis ca. 12000) mit einem Überschuß an Polyisocyanaten entstehen.

Als Polyisocyanate zur Herstellung der freie NCO-Gruppen aufweisenden Verbindungen kommen im Prinzip beliebige, aromatische, aliphatische und heterocyclische Di-und Polyisocyanate in Frage, wie sie z.B. von W. Siefken in Justus Liebigs Annalen der Chemie, 562, S. 75-136, (1949), beschrieben werden, oder wie sie, zusammen mit für diese Umsetzungen geeigneten niedermolekularen und/oder höhermolekularen Hydroxy-und/oder Amino-und/oder Thiolgruppen als reaktive Gruppen enthaltende Verbindungen des MG-Bereichs 32 und 60-12000, auf S. 12-23 der DE OS 3 223 397 aufgeführt sind, bzw. im Stand der Technik bekannt sind.

Für das erfindungsgemäße Verfahren werden NCO-Prepolymere bevorzugt, die aus höhermolekularen Polyolen (Molmasse 400-12000), vorzugsweise Polyetherpolyolen, gegebenenfalls unter Mitverwendung von Kettenverlängerungsmitteln der oben beschriebenen Art - (Molmasse 62-399), durch Umsetzung mit aromatischen Diisocyanaten im Äquivalentverhältnis von 1:1,5 bis 1:2,8, insbesondere ca. 1:1,5 bis 1:2, erhalten worden sind.

Der NCO-Gehalt der eingesetzten - (vorzugsweise urethangruppenfreien) NCO-Prepolymere sollte 0,5 % bis 40 Gew.-%, bevorzugt 1,2 bis 25 Gew.-%, insbesondere aber 1,5 bis 10 Gew.-% bei Funktionalitäten von 2 bis 8, bevorzugt 2 bis 4 und insbesondere 2 bis 3 betragen.

Im erfindungsgemäßen Verfahren können jedoch auch sogenannte "Semiprepolymere", d.h. Mischungen von NCO-Prepolymeren oder modifizierten Polyisocyanaten mit weiteren freien Polyisocyanaten, eingesetzt werden.

Als Komponente b) wird Wasser, bevorzugt in flüssiger Form, eingesetzt. Um eine ausreichende Umwandlung der NCO-Gruppen in $NH_2$-Gruppen zu bewirken, muß mindestens ein Äquivalent Wasser pro Äquivalent NCO mitverwendet werden - (hierunter wird für die vorliegende Reaktion 1 Mol Wasser pro Äquivalent NCO verstanden).

Wird deutlich weniger als 1 Mol (insbesondere <0,75 Mol) Wasser verwendet, so tritt bevorzugt Vorverlängerung unter Harnstoffbildung auf. Andererseits hat es sich überraschenderweise herausgestellt, daß die Verwendung eines sehr großen Überschusses an Wasser gleichfalls zu höheren, unerwünschten Vorverlängerungsanteilen führt. Dies gilt auch dann, wenn das Reaktionsgemisch einphasig ist. Es hat sich herausgestellt, daß die optimale Menge Wasser u.a. auch an der mitverwendeten Menge Lösungsmittel orientiert werden muß, nicht nur an der Menge an umzuwandelnden NCO-Gruppen.

Bezogen auf 1 Äquivalent NCO werden ≥0,75 Mol Wasser bevorzugt ≥0,75-50 Mol Wasser, besonders bevorzugt 1-35 Mol Wasser, ganz besonders bevorzugt 1,25-12 Mol Wasser verwendet. Verwendet man z.B. ein bifunktionelles NCO-Prepolymer mit T 100 = 2,4-Toluylendiisocyanat des NCO-Gehaltes 3,6 Gew.-%, so ergibt sich ein NCO-Äquivalentgewicht von ca. 1167. Das heißt, auf ca. 1167 g dieses Prepolymeren sollen ≥13,5 g Wasser, bevorzugt 13,5-900 g, besonders bevorzugt 18-630 g, ganz besonders bevorzugt 22,5-216 g Wasser verwendet werden.

Gleichzeitig mit dem beanspruchten Wasser/NCO-Verhältnis müssen jedoch erfindungsgemäß auch bestimmte Gewichtsverhältnisse von Lösungsmittel d) zu Wasser eingehalten werden. Diese Gewichtsverhältnisse reichen von 3:1 bis 200:1, doch liegen sie bevorzugt bei 5:1 bis 150:1, speziell ≥10:1 bis 100≥1, und insbesondere optimal zumeist bei ≥25:1 bis 75:1.

Das heißt, daß bezogen auf z.B. 1000 g Lösungsmittel d) (bevorzugt Dimethylformamid) Wasser in Mengen von 5 bis 333 g verwendet wird.

Es hat sich gezeigt, daß -unter Einhaltung der weiteren, erfindungsgemäßen Bedingungen -insbesondere ein relativ hoher Gehalt an Lösungsmittel d) in der Lösungsmittel/Wasser-Mischung (insbesondere Dimethylformamid/Wasser-Mischung) zu einer besonders günstigen NCO/$NH_2$-Konversionsrate führt und daß dann auch die einzusetzenden Katalysatormengen minimal sein können.

Bei Beachtung der notwendigen, absoluten Wassermenge und des günstigeren Lösungsmittel/Wasser-Verhältnisses ergibt sich das Lösungsmittel so, daß ≥10 Gew.-Teile, bevorzugt ≥100 Teile und besonders bevorzugt bis 1000 Gew.-Teile Lösungsmittel d) auf 100 Gew.-Teile der NCO-Komponente eingesetzt werden. Es hat sich dabei gezeigt, daß die zur Erzielung vollständiger NCO/$NH_2$-Umwandlungen notwendige minimale Lösungsmittelmenge von der Reaktionstemperatur abhängig ist. Je höher die Reaktionstemperatur ist, desto geringer kann die Lösungsmittelmenge d) gehalten werden. Die notwendige Wassermenge (bezogen auf NCO) bleibt hiervon weitgehend unberührt.

Gegebenenfalls können zur Ermittlung des jeweils optimalen Verhältnisses von NCO-Äquivalenten, Wasser und Lösungsmittel d) für eine bestimmte NCO-Komponente c) innerhalb des angegebenen allgemeinen Rahmens einige Versuche durchgeführt werden.

Als Komponente c) können basische, keine NCO-reaktiven Gruppen enthaltende und/oder Metall-Katalysatoren eingesetzt werden. Als solche werden solche Verbindungen angesehen, die in der Lage sind, die Produkt-NH-Zahl der Amine, so wie sie ohne Verwendung von Katalysatoren erhalten wird, anzuheben.

Die verwendeten Katalysatoren können fest oder flüssig sein, müssen jedoch im Reaktionsgemisch eine ausreichende, bevorzugt vollständige, Löslichkeit besitzen. Bezogen auf 100 Gew.-% der Isocyanatkomponente werden sie im allgemeinen zu 0,00005-1 Gew.-%, eingesetzt. Für die einzelnen Katalysatortypen gelten dabei verschiedene, bevorzugte Mengenbereiche, wie sie in den Ansprüchen und in der Beschreibung aufgezählt sind. Die Menge an notwendigem Katalysator ist auch abhängig vom Lösungsmittel/Wasser-Verhältnis. Bei einem ermittelten optimalen Lösungsmittel/Wasser-Verhältnis ist der Katalysatorbedarf am geringsten, jedoch ist immer noch eine überraschend geringe Menge Katalysator nötig, um möglichst hohe NCO/NH$_2$-Konversionsraten zu erzielen. Durch einer erhöhte Katalysatormenge kann andererseits ein nicht ganz optimiertes Wasser/Lösungsmittelverhältnis auch gute Ergebnisse bringen. Die Menge an zur vollständigen Umwandlung von NCO-in NH$_2$-Gruppen notwendigem Katalysator ist auch von der Reaktionstemperatur abhängig. Es zeigte sich, daß diese Menge bei niedriger Temperatur, z.B. 45°C, zweckmäßig höher gewählt werden sollte, als bei höherer Reaktionstemperatur, z.B. bei 100°c. Bei gegebener Katalysatormenge und unvollständiger Aminausbeute kann man diese durch Erhöhung der Reaktionstemperatur steigern.

Als Katalysatoren c) können eingesetzt werden:

1. Basische, keine NCO-reaktiven Gruppen enthaltende anorganische und organische Salze und bevorzugt Hydroxide.

Als solche werden Salze starker organischer oder anorganischer Basen mit schwachen anorganischen oder organischen Säuren, die in Wasser eine alkalische Reaktion geben, aufgefaßt. Es wurden insbesondere eingesetzt:

Hydroxide von Alkali-und Erdalkalimetallen sowie Tetraalkylammoniumhydroxide, insbesondere NaOH und KOH, ferner lösliche Aluminate wie z.B. Na-Aluminat,

Carbonate von Alkalimetallen, insbesondere Soda und Pottasche,

Hydrogencarbonate von Alkalimetallen, insbesondere Natrium-und Kaliumhydrogencarbonat,

Alkali-und Erdalkalisalze von Mono-und Polycarbonsäuren, die keine NCO-reaktiven Gruppen enthalten, vorzugsweise Salze von aliphatischen Monocarbonsäuren mit bis zu 18 C-Atomen, z.B. Natriumformiat, Natriumacetat, Kaliumoctoat oder Kaliumstearat.

Alkalisalze von gegebenenfalls mit nicht NCO-reaktiven Gruppen substituierten Phenolen und Thiophenolen, lösliche Alkali-und Erdalkalisalze - schwacher, vorzugsweise anorganischer Säuren wie Cyansäure, Isocyansäure, Thiocyansäure, Isothiocyansäure, Kieselsäure, Phosphor-III-bis -V-Säuren, Cyanwasserstoffsäure, Stickstoffwasserstoffsäure etc.,

Alkalimetallmercaptide und Sulfide bzw. Hydrogen-(poly)sulfide,

β-Diketon-Verbindungen wie die Na-, K-, Mg-acetylacetonate und Acetoacetate.

2. Tertiäre Amine

Als tertiäre Amine werden vorzugsweise solche aliphatischer oder cycloaliphatischer Struktur eingesetzt, wobei auch Gemische verschiedener tertiärer Amine eingesetzt werden können.

Beispiele sind z.B. meist nicht vollständig wasserlösliche Vertreter wie die Trialkylamine, z.B. Trimethylamin, Triethylamin, Tripropylamin, Triisopropylamin, Dimethyl-n-propylamin, Tri-n-butylamin, Tri-isobutylamin, Tri-isopentylamin, Dimethylbutylamin, Triamylamin, Trioctylhexylamin, Dodecyldimethylamin, Dimethylcyclohexylamin, Dibutylcyclohexylamin, Dicyclohexylethylamin, Tetramethyl-1,3-butandiamin, aber auch tertiäre Amine mit einer arali phatischen Gruppe wie Dimethyl-benzylamin, Diethyl-benzylamin, α-Methylbenzyl-dimethylamin.

Bevorzugt sind Trialkylamine mit insgesamt 6 bis 15 C-Atomen in allen Alkylresten, z.B. Triethylamin bis Triamylamin bzw. Dimethylcyclohexylamin.

Gut geeignete tertiäre Amine sind neben den Trialkylaminen solche Amine, welche insbesondere in β-Stellung zur tertiären Gruppe eine weitere tertiäre Amino-oder eine Ethergruppe aufweisen. Beispiele sind Dialkylamino-alkyl-ether oder Bisdialkylaminoalkylether (US-PS 3 330 782, DE-B 1 030 558), z.B. Dimethyl-(2-ethoxyethyl)-amin, Diethyl-(2-methoxypropyl)-amin, Bis-[2-dimethylaminoethyl]-ether, Bis-[2-diethylaminoethyl]-ether, Bis-[2-diethylaminoisopropyl]-ether, 1-Ethoxy-2-dimethylaminoethoxyethan, N-Methyl-morpholin, N-Ethylmorpholin, N-Butyl-morpholin, ferner permethylierte Polyalkylendiamine wie Tetramethylethylendiamin, Tetramethyl-1,2-propylendiamin, Pentamethyldiethylentriamin, Hexamethyl-triethylen-tetramin und höhere permethylierte Homologe (DE-A 2 624 527 und -528), ferner Diethylaminoethyl-piperidin, 1,4-Diaza-(2,2,2)-bicyclooctan, N,N'-Dimethylpiperazin, N,N'-Diethylpiperazin, N-Methyl-N'-dimethylaminoethyl-piperazin, N,N'-Bis-dimethylaminoethyl-piperazin, N,N'-Bis-dimethylaminopropylpiperazin und andere, in der DE-A 2 636 787 zitierte Bis-dialkylaminoalkyl-piperazine.

Bevorzugt aus dieser Gruppe sind die wasserlöslichen Verbindungen wie Tetramethylendiamin, permethyliertes Diethylentriamin, N-Methylmorpholin, Bis-2-dimethylaminoethyl-ether und N-Methylpiperidin.

Einsetzen lassen sich auch acylierte tertiäre Aminderivate, wie z.B. 1-Dimethylamino-3-formylaminopropan, N-(2-Dimethylaminoethyl)-propionamid, N-(2-Diethylaminoethyl)-benzamid, sowie andere Amidgruppen (vorzugsweise Formamidgruppen) enthaltende tertiäre Amine gemäß DE-A 2 523 633 und 2 732 292.

Wirksam sind auch tertiäre Amine vom Pyridintyp und tertiäre Amine mit mindestens einem an das N-Atom gebundenen aromatischen Rest, z.B. Dimethylanilin.

Insoweit es sich nicht um wasserlösliche tertiäre Amine handelt, soll ihr Siedepunkt zweckmäßig unter 250°C, bevorzugt unter 200°C, liegen.

## 3. Metallkatalysatoren

Als Verbindungen c) können auch die aus der Literatur für die Katalyse der Isocyanatchemie bekannten mehrwertigen Metallverbindungen im erfindungsgemäßen Verfahren angewendet werden. Es handelt sich hier bevorzugt um Verbindungen des Zinns, Zinks oder Bleis, beispielsweise seien Dibutylzinndilaurat, Zinnoctoat, Zinkacetylacetonat oder Bleioctoat genannt; insgesamt sind sie weniger bevorzugt.

Die erfindungsgemäß zu verwendenden Katalysatoren sind technisch leicht zugängliche, wohlfeile Katalysatoren, die gegebenenfalls abgetrennt und wiederverwendet werden können, in der bevorzugten Ausführungsform jedoch im Produkt verbleiben. Falls aus bestimmten Gründen notwendig, ein völlig Katalysator-freies Produkt zu erhalten, so ist es auch möglich, ohne basischen und/oder Metall-Katalysator zu arbeiten, wenn die Bedingungen a) bis c), besonders aber auch das optimale Verhältnis von Lösungsmittel d) zu Wasser und gleichzeitig das Verhältnis von Wasser zu NCO eingehalten wird, welches in einem Vorversuch ermittelt werden kann, und wenn bei vergleichsweise hohen Temperaturen innerhalb der nachstehend genannten Temperaturbereiche, d.h. vorzugsweise oberhalb 80 -100°C gearbeitet wird. Bevorzugt wird jedoch immer in Anwesenheit von Katalysatoren, bevorzugt basischen Katalysatoren wenn auch äußerst geringen Mengen an Katalysatoren, gearbeitet.

Als Lösungsmittel-Komponente d) werden

d1) zumindest teilweise, bevorzugt vollständig wassermischbare oder wasserlösliche aromatische, aliphatische oder cycloaliphatische Carbonsäureamide mit 1-10 C-Atomen im Säureanteil, wie Dialkylamide oder N-substituierte Lactame, z.B. Dimethylformamid (DMF), Formamid, Diethylformamid, Dimethylacetamid, Dimethylpropionsäureamid, Benzoesäuredimethylamid, N-Methylpyrrolidon eingesetzt. Bevorzugt sind Carbonsäure-dialkylamide, insbesondere Dimethylformamid.

Komponente d) kann bis zu 75 Gew.-% anderer aprotisch-dipolarer Lösungsmittel enthalten:

d2) wasserlösliche, tetraalkylierte aliphatische Harnstoffe mit 4 bis 12 C-Atomen, z.B. Tetramethylharnstoff oder Tetraethylharnstoff,

d3) wasserlösliche, aliphatische oder cycloaliphatische Sulfone oder Sulfoxide mit 2 bis 10 Kohlenstoffatomen, z.B. Tetramethylsulfon oder Dimethylsulfoxid,

d4) wasserlösliche, aliphatische oder cycloaliphatische Phosphorsäureamide, z.B. Hexamethylphosphorsäuretriamid.

Die Lösungsmittel d2) -d4) können auch in beliebigen Mischungsverhältnissen zueinander eingesetzt werden. Unter den genannten Lösungsmitteln d2) -d4) werden solche bevorzugt, welche bei Normaldruck zwischen 56 und 250°C, vorzugsweise 64 bis 165°C, sieden, da sich hierbei die Aufarbeitung vereinfacht.

Eine Mitverwendung von nicht vollständig mit Wasser mischbaren Lösungsmitteln, z.B. Propionitril, Methylethylketon, Ethylacetat oder Kohlenwasserstoffen ist in untergeordneten Mengen möglich, aber nicht bevorzugt. Bevorzugt wird alleinig und ausschließlich DMF als Lösungsmittel verwendet.

Für die Mengen (insbesondere die Obergrenzen) an einzusetzenden Lösungsmitteln d) gelten folgende Randbedingungen des Verfahrens:

1. Pro 100 Gew.-% NCO-Verbindung a) sollen in der Hydrolyse-Reaktionsmischung ≧10, bevorzugt 100 -1000 Gew.-% d) verwendet werden.

2. Es muß soviel Wasser b) und gegebenenfalls Lösungsmittel d) verwendet werden, daß eine im wesentlichen homogene (höchstens schwach trübe) oder vorzugsweise eine homogene, klare Lösung mit der NCO-Verbindung bei den Reaktionstemperaturen gebildet wird; besonders bevorzugt soviel Wasser, daß eine bei allen Verfahrenstemperaturen einphasige Mischung entsteht, jedoch immer unter Beachtung des oben Gesagten über das Verhältnis von Lösungsmittel (DMF): Wasser und das von Wasser:NCO-Komponente a).

Die katalytisch wirkenden Verbindungen werden im allgemeinen den Lösungsmitteln und Wasser zugesetzt. Die Zugabe zur Isocyanatgruppenhaltigen Verbindung ist u.U. möglich, aber nicht bevorzugt.

Zur Hydrolyse der NCO-Verbindung zu Polyaminen mit hinreichend hoher Aminzahl (hoher Konversionsrate) ist es günstig, eine Konzentration der NCO-Verbindung von $\leq 75$, vorzugsweise $\leq 55$ Gew.-% in der Reaktionsmischung aufrechtzuerhalten.

Eine Grenze der Verdünnung ergibt sich praktisch aus der Wirtschaftlichkeit bei der Aufarbeitung; sie dürfte in der Praxis etwa bei 3 %iger Lösung liegen.

Es ist dabei aber unter Beachtung der oben genannten Beziehungen zwischen Wasser-, Lösungsmittel und Isocyanat-Mengen mindestens so viel Lösungsmittel d) mitzuverwenden, daß eine weitgehend homogene, vorzugsweise vollständige homogene Reaktionsmichung verbleibt.

In einer weiteren Ausführungsform können der Reaktionsmischung auch "H-aktive Gruppen" enthaltende Verbindungen e) mit zwei oder mehreren Hydroxy-, Amino-und/oder Thiolgruppen beigemischt werden. Diese Verbindungen wurden bereits als Aufbaukomponenten der im erfindungsgemäßen Verfahren einsetzbaren NCO-Verbindungen genannt, besonders bevorzugt sind difunktionelle bis gegebenenfalls tetrafunktionelle Verbindungen des Molekulargewichts 62-2000, insbesondere solche mit mindestens 2 primären Hydroxygruppen, z.B. Ethandiol, Butandiol, Propandiol, Polyethylenglykole, Trimethylolpropan oder ähnliche. Selbstverständlich können auch Verbindungen mit verschiedenen "H-aktiven Gruppen" verwendet werden. z.B. Aminoalkanole.

Verbindungen, die nur eine H-aktive Gruppe aufweisen, z.B. Methanol, Ethanol, Cyclohexanol, Cyclohexylamin, Anilin, asymmetrisches Dimethylhydrazin, können als monofunktionelle Kettenabbrecher mitverwendet werden.

Als Nebenreaktion im erfindungsgemäßen Verfahren kann die Vorverlängerung auftreten, d.h. Isocyanat und bereits gebildetes Amin reagieren unter Kettenverknüpfung zu Harnstoffen. Diese Nebenreaktion läßt sich durch Arbeiten in verdünnter Lösung, der Verwendung der erfindungsgemäßen Katalysatoren c) und Lösungsmitteln d) und der Einhaltung relativ hoher Reaktionstemperaturen, z.B. 80 bis 130°C, weitgehend zurückdrängen. Zwar ist ein möglichst geringes Ausmaß dieser Nebenreaktionen erwünscht, aus ökonomischen Gründen kann aber auch ein gewisser Grad an Vorverlängerung in Kauf genommen werden.

Die erfindungsgemäße Methode erlaubt jedoch bei ausreichender Beachtung der Verfahrensparameter eine praktisch vollständige Umwandlung von NCO-in $NH_2$-Gruppen.

Die erfindungsgemäße Reaktion wird bevorzugt in homogener Phase durchgeführt. Durch ein geringfügiges Überdosieren der Wassermenge oder der Menge der NCO-Verbindung kann gegebenenfalls vorübergehend eine leichte Trübung der Reaktionsmischung erhalten werden, da die Ausgangsstoffe nicht mehr vollständig gelöst sind.

Eine durch übermäßige Wasserzugabe unter Ausfällung des NCO-Prepolymers erhaltene Mehrphasigkeit ergibt jedoch unzureichende Produkte. Durch einige wenige Vorversuche lassen sich die von den Ausgangsverbindungen abhängigen optimalen Mischungsverhältnisse zur Erreichung homogener Mischungen unter Beachtung der Verhältnisse zwischen a), b), c) und d) ermitteln.

Wie bereits ausgeführt, kann die Reaktion bei Temperaturen von 20 bis 210°C durchgeführt werden. Bevorzugt wird jedoch bei Temperaturen von 40 bis 150°C, insbesondere von 80 bis 130°C gearbeitet, da hierbei die besten Raum/Zeit-Ausbeuten bei gleichzeitig hoher Löslichkeit und überraschenderweise geringster Harnstoff-Verlängerung erreicht werden. Unter besonderen Umständen kann es auch notwendig werden, die Reaktion unter Druck durchzuführen, um ausreichend hohe Temperaturen zu erhalten.

Das Einsetzen der Reaktion ist durch die fast spontane Abspaltung von $CO_2$ zu erkennen, die auch bereits bei niedrigen Temperaturen, z.B. 10°C, beobachtbar ist. Es ist jedoch erbeblich günstiger, erfindungsgemäß bei den angegebenen höheren Temperaturen zu arbeiten, um die Harnstoffbildung zurückzudrängen. Wichtig ist, daß für eine sehr gute und schnelle Durchmischung unter homogener Lösung der Reaktanten gesorgt wird, was im wesentlichen durch die Verwendung der Lösungsmittel sichergestellt werden muß. In gleicher Richtung wirkt auch die Viskositätsverminderung bei Andwendung der höheren Reaktionstemperaturbereiche. Die Reaktion kann diskontinuierlich oder kontinuierlich durchgeführt werden.

Zur kontinuierlichen oder diskontinuierlichen Ausführungsform gilt das in DE OS 3 223 397, S. 32, Z. 20 -S. 35, Z. 10 Offenbarte.

Auch die Aufarbeitung kann kontinuierlich oder diskontinuierlich erfolgen. Die Aufarbeitung des Reaktionsgemisches geschieht gewöhnlich destillativ, extraktiv oder über eine Phasentrennung oder mit einer Kombination dieser Methoden.

Das Extraktionsverfahren gegenenfalls nach Verdünnung mit Wasser kann mit wasserunlöslichen Lösungsmitteln wie Methylenchlorid oder Chlorbenzol durchgeführt werden.

Eine Phasentrennung des Reaktionsgemisches durch Abkühlung tritt in manchen Fällen ein, wenn die Hydrolyse bei relativ hohen Temperaturen und in Gegenwart von relativ viel Wasser an der Grenze der Löslichkeit vorgenommen wurde. Die Phasentrennung kann durch Zusatz von Wasser verbessert oder auch erst erreicht werden. Man trennt die wäßrige, gegebenenfalls Lösungsmittel und zumeist auch den Katalysator enthaltende Phase von der Polyaminphase ab.

Die wäßrige Phase kann dann meistens direkt wiederverwendet werden.

Die Polyaminphase enthält neben dem Polyamin gegebenenfalls Restmengen des Katalysators, gegebenenfalls etwas Wasser, sowie evtl. Lösungsmittel d), welche destillativ, gegebenenfalls unter Anlegen eines Vakuum oder über eine Dünnschichtdestillation, möglichst vollständig entfernt werden.

Enthält die NCO-Gruppen-haltige Verbindung - bedingt durch ihre Herstellung -noch freies, d.h. monomeres Isocyanat, so kann u.U. das hieraus entstehende monomere Amin bei der Aufarbeitung durch Phasentrennung sich in der Wasser/Lösungsmittel stark anreichern. Das durch diese einfache Aufarbeitung erhaltene Polyamin ist dann praktisch monomerenfrei. Es kann sich dann aber empfehlen, die Lösungsmittelphase durch Aufarbeitung von monomerem Amin weitgehend zu befreien, bevor sie wiederverwendet wird.

Bevorzugte Aufarbeitungsform:

Bevorzugt erfolgt die Aufarbeitung des Reaktionsgemisches ohne Phasentrennung so, daß nach Beendigung der Reaktion (keine $CO_2$-Entwicklung mehr zu beobachten) das Lösungsmittel bzw. Lösungsmittel/Wasser-Gemisch, bevorzugt unter Anwendung von Vakuum, z.B. 1 -700 Torr, abdestilliert wird, wobei zur Entfernung flüchtiger Reste noch höheres Vakuum, z.B. 0,001 -1 Torr, angelegt werden kann. Ein Temperaturbereich von anfangs ca. 60 -100°C, später 80 -100°C, hat sich hierbei bewährt. Das abdestillierte Lösungsmittel kann, gegebenenfalls mehrmals, wiederverwendet werden.

Die nach der Aufarbeitung erfindungsgemäß erhaltenen Polyamine stellen im allgemeinen farblose bis schwach gefärbte, mittelviskose bis hochviskose und gegebenenfalls höherschmelzende Produkte mit den bereits angegebenen Aminogruppengehalten dar. Diese Polyamine weisen entsprechend ihren Ausgangsstoffen ferner Urethan- und/oder Harnstoff -und/oder Uretdion-und/oder Isocyanurat-und/oder Biuretgruppen und/oder Uretoniminigruppen, sowie gegebenenfalls Ether- und/oder Acetal-und/oder Carbonat-und/oder Ester- und/oder Thioether und/oder Dialkylsiloxangruppen und/oder die Reste von Polybutadienen auf, wie sie bereits in den NCO-Verbindungen vorgelegen haben. Durch Nebenreaktion können jedoch auch zusätzliche Bindungen enstehen, z.B. Harnstoffgruppen aus bereits verseiften Anteilen und noch verbliebenen NCO-Gruppen während der Hydrolysereaktion. Die Menge der in den Polyaminen enthaltenen primären aromatischen Aminogruppen entspricht maximal der Menge der NCO-Gruppen in den NCO-Verbindungen, also etwa 0,19 bis 15,23 Gew.-% $NH_2$ (bei 0,5 bis 40 Gew.-% NCO), bevorzugt 0,46 bis 9,52 Gew.-% $NH_2$ (bei 1,2 bis 25 Gew.-% NCO) und besonders bevorzugt 0,58 bis 3,81 Gew.-% $NH_2$ (bei 1,5 bis 10 Gew.-% NCO).

Die erfindungsgemäß erhaltenen, bevorzugt aromatischen Polyamine werden wegen ihres niedrigen Dampfdruckes vorzugsweise als Reaktionspartner für gegebenenfalls blockierte Polyisocyanate bei der Herstellung von Polyurethanen - (Polyurethanharnstoffen), gegebenenfalls zellhaltigen Polyurethankunststoffen oder Polyurethanschaumstoffen eingesetzt, wobei sie gegebenenfalls auch mit anderen niedermolekularen - (Molekulargewicht 32 bis 399) und/oder höhermolekularen (Molekulargewicht 400 bis ca. 12 000) Verbindungen mit gegenüber Isocyanaten reaktiven Gruppen kombiniert werden können. Geeignete Ausgangskomponenten für die an sich bekannte Herstellung von Polyurethankunststoffen werden oben im Zusammenhang mit der Prepolymerherstellung bzw. auch in DE-A 2 302 564, DE-A 2 432 764 US-PS 3 903 679) sowie in den DE-A 2 639 083, 2 512 385, 2 513 815, 2 550 796, 2 550 797, 2 550 833, 2 550 860 und 2 550 862 genannt. Dort finden sich auch Hinweise auf bei der Polyurethanherstellung gegebenenfalls mitzuverwendende Hilfs-und Zusatzstoffe.

Verfahren zur Herstellung von Polyurethan-(harnstoff)en unter Einsatz der erfindungsgemäß erhaltenen Polyamine ist ebenfalls Gegenstand der vorliegenden Erfindung: Es können so z.B. Elastomere, Beschichtungen, Fäden in der Applikation aus Schmelzen, Lösungen, Dispersionen oder Reaktivkomponentenmischungen hergestellt werden.

Weitere Verwendungszwecke der erfindungsgemäß hergestellten Polyamine sind z.B. Kupplungskomponenten für Diazofarbstoffe, Härter für Epoxid-und Phenolharze, sowie alle anderen an sich bekannten Reaktionen von Aminen wie Amid- oder Imidbildung und andere.

Die folgenden Beispiele dienen der Erläuterung des erfindungsgemäßen Verfahrens. Wenn nicht anders vermerkt, sind Mengenangaben als Gewichtsteile bzw. Gewichtsprozente zu verstehen.

Beispiele

<u>Beispiel 1</u> (ohne basischen Katalysator)

In diesem Beispiel wird ein NCO-Prepolymer mit einem NCO-Gehalt von 3,65 % verwendet, hergestellt durch 3-stündiges Rühren eines Gemisches aus Polypropylenglykol der OH-Zahl 56 und Toluylen-2,4-diisocyanat im Äquivalent-Verhältnis NCO:OH = 2:1 bei 80°C.

Vorgelegt wird ein Gemisch aus 1750 ml Dimethylformamid (DMF) und 50 ml Wasser (DMF/$H_2O$ = 33,2:1) und unter Rühren auf 90°C erhitzt. Innerhalb von 20 min wird bei dieser Temperatur 500 g des obigen NCO-Prepolymers zugegeben. Nach Beendigung der Zugabe wird noch 5 min nachgerührt (rasch abklingende $CO_2$-Entwicklung) und dann durch Anlegen von Vakuum (zuerst 19,5 mbar, dann 0,13 mbar bei 80 bis 100°C) DMF und Wasser abdestilliert.

NH-Zahl ($HClO_4$) : 31,1 mg KOH/g

<u>Beispiel 2</u> (Verwendung eines neutralen Elektrolyten)

Vorgelegt wird ein Gesmisch aus 1750 ml DMF, 50 ml Wasser und 1 g Natriumchlorid. Nach Versuchsdurchführung und Aufarbeitung wie in Beispiel 1 wird eine NH-Zahl ($HClO_4$) von 31,3 mg KOH/g gefunden.

Wie Beispiele 1) und 2) zeigen, läßt sich mit DMF/$H_2O$-Gemischen eine Hydrolyse mit relativ gutem Ergebnis durchführen, doch sind die Konversionsraten ohne Katalysator erheblich niedriger als unter Zusatz (selbst geringer) Katalysatormengen -vgl. Beispiel 9.

<u>Beispiel 3</u> (Vergleichsbeispiel)

(Verwendung einer Säure als Katalysator)

Vorgelegt wird bei 90°C eine Mischung aus 1750 ml DMF, 50 ml Wasser und 1 g Essigsäure. Nach Versuchsdurchführung und Aufarbeitung wie in Beispiel 1 wird ein Produkt mit einer NH-Zahl - ($HClO_4$) von nur 28,4 mg KOH/g erhalten.

<u>Beispiele 4-6</u> (Vergleichsbeispiel)

(Verwendung nicht erfindungsgemäßer Lösungsmittel)

In diesen Beispielen wird ein NCO-Prepolymer, das identisch wie das Prepolymer aus Beispiel 1 hergestellt wurde, verwendet, das jedoch einen NCO-Gehalt von 3,3 % aufweist.

Bei 90°C bzw. Rückflußtemperatur wird unter Rühren vorgelegt ein Gemisch aus 1,75 1 Aceton bzw. 1,75 1 Dioxan bzw. 1,75 1 Acetonitril, 25 ml Wasser und 0,1 g Natriumhydroxid, Versuchsdurchführung und Aufarbeitung wie in Beispiel 1.

NH-Zahlen ($HClO_4$)

bei Verwendung von Aceton : 27,9 mg KOH/g

Dioxan : 6,85 mg KOH/g

Acetonitril : 26,9 mg KOH/g

Es werden -trotz Verwendung alkalischer Katalysatoren -nur unbefriedigende Konversionsraten NCO in $NH_2$ erzielt (d.h. niedrige NH-Zahlen).

<u>Beispiel 7</u> (Vergleichsbeispiel)

(Verwendung eines nicht erfindungsgemäßen Lösungsmittels)

Vorgelegt wird bei 90°C ein Gemisch aus 1750 ml Methylethylketon, 50 g Wasser und 0,2 g Natriumformiat. Innerhalb von 20 min werden 500 g des NCO-Prepolymers aus Beispiel 1 zugegeben. Nach Aufarbeitung wie in Beispiel 1 wird ein Produkt mit einer NH-Zahl ($HClO_4$) von 31,5 mg KOH/g gehalten. Die OH-Zahl liegt deutlich niedriger als bei Verwendung erfindungsgemäßer Solventien d).

<u>Beispiel 8</u> (Vergleichsbeispiel)

Vorgelegt werden bei Rückflußtemperatur 1 l Methylethylketon, 15,2 g Dimethylformamid, 30 ml Wasser und1 g Natriumformiat. Zugegeben werden innerhalb 20 min 300 g eines NCO-Prepolymers aus Beispiel 1. Nach Aufarbeitung wie in Beispiel 1 wird ein Produkt mit einer NH-Zahl ($HClO_4$) von 23,9 mg KOH/g erhalten.

Beispiele 9-22

In diesen Beispielen werden die katalytischen Eigenschaften von Natronlauge (NaOH) vorgestellt.

Beispiel 9

In diesem Beispiel wird ein Prepolymer des NCO-Gehaltes 3,9%, hergestellt durch 3-stündiges Rühren eines Gemisches aus Toluylen-2,4-diisocyanat und einem Polyester der OH-Zahl 56 aus Adipinsäure, Ethylenglykol und Butan-1,4-diol (Mol-

Verhältnis Ethylenglykol:Butandiol = 7.3) im NCO:OH-Verhältnis 2:1, verwendet.

Vorgelegt wird ein Gemisch aus 5,5 l DMF, 125 ml Wasser (DMF/Wasser-Verhältnis = 41,7:1; 2,9 Mol Wasser pro NCO-Äquivalent) und 0,25 g NaOH (0,01 Gew.-%, bezogen auf NCO-Prepolymer) und auf 90°C aufgeheizt. Innerhalb von 45 min werden 2,5 kg des auf 70°C erwärmten, oben beschriebenen Polyetherprepolymers zugegeben. Aufarbeitung wie in Beispiel 1.

NH-Zahl (HC10₄) : 47,85 mg KOH/g

NH-Zahl (Ac₂O/Py) : 47,9 mg KOH/g [Py = Pyridin]

S-Zahl (Ac₂O/Py : 0,35 mg KOH/g [S-Zahl = Säurezahl]

TDA-Gehalt (HPLC) : 0,921 % [HPLC = High Pressure Liquid Chromatography]

DMF-Rest-Gehalt (GC) : 0,225 % [GC = Gaschromatographie]

Beispiel 10

Vorgelegt wird ein 90°C heißes Gemisch aus 1,75 l DMF, 0,08 g NaOH (0,016 Gew.-%, bezogen auf NCO-Prepolymer) und 50 ml Wasser - (DMF/H₂O-Verhältnis = 33,2:1; 6,375 Mol Wasser pro NCO-Äquivalent). Innerhalb 1 min werden 500 g des NCO-Prepolymers aus Beispiel 1 mit 3,65 % NCO zugegeben. Aufarbeitung wie in Beispiel 1.

NH-Zahl (HC10₄) : 44,8 mg KOH/g

NH-Zahl (Ac₂O/Py) : 46,4 mg kOH/g

S-Zahl (Ac₂O/Py) : 0,1 mg KOH/g

Beispiele 11 und 12

Vorgelegt wird bei 90°C ein Gemisch aus 1,1 l DMF, 0,05 g NaOH (0,01 Gew.-%, bezogen auf NCO-Prepolymer) und 25 g Wasser (DMF/Wasser-Verhältnis = 41,7:1; 3,52 Mol Wasser pro NCO-Äquivalent). Innerhalb von 20 min werden 500 g des NCO-Prepolymers aus Beispiel 4 mit 3,3 % NCO zugegeben. Aufarbeitung wie in Beispiel 1.

NH-Zahl (HC10₄) : 47,4 mg KOH/g

NH-Zahl (Ac₂O/Py) : 47,6 mg KOH/g

S-Zahl (Ac₂O/Py) : 0,09 mg KOH/g

TDA-Gehalt (HPLC) : 0,438 %

Wird statt 0,05 g NaOH 0,1 g NaOH (0,02 Gew.-% bezogen auf NCO-Prepolymer) bei sonst identischen Bedingungen und Komponenten verwendet, so wird ein Produkt mit einer NH-Zahl - (HC10₄) von 46,1 mg KOH/g erhalten.

Beispiel 13

Vorgelegt wird ein Gemisch aus 1,1 l DMF, 0,025 g NaOH (0,005 Gew.-%, bezogen auf NCO-Prepolymer) und 25 g Wasser auf 90°C aufgeheizt (DMF/Wasser-Verhältnis = 41,7:1).

Zugegeben werden innerhalb 20 min 500 g NCO-Prepolymer aus Beispiel 1 mit 3,6 % NCO - (3,23 Mol Wasser pro NCO-Äquivalent). Aufarbeitung wie in Beispiel 1.

NH-Zahl (HC10₄) : 46,7 mg KOH/g

Beispiel 14

Vorgelegt wird ein Gemisch aus 1,75 l DMF, 0,01 g NaOH (0,002 Gew.-%, bezogen auf NCO-Prepolymer) und 50 g Wasser (DMF/Wasser-Verhältnis = 33,2:1) und auf 90°C aufgeheizt. Zugegeben werden innerhalb von 20 min 500 g des NCO-Prepolymers aus Beispiel 1 mit 3,6 % NCO (6,46 Mol Wasser pro NCO). Aufarbeitung wie in Beispiel 1.

NH-Zahl (HC10₄) : 43,4 mg KOH/g

NH-Zahl (Ac₂O/Py) : 49,15 mg KOH/g

S-Zahl (Ac₂O)/Py : 0,1 mg KOH/g

Beispiel 15

Vorgelegt wird ein Gemisch aus 1,1 l DMF, 0,025 g NaOH und 25 g Wasser und auf 90°C erhitzt. Zugegeben werden innerhalb von 1 min 500 g des NCO-Prepolymers aus Beispiel 4 mit 3,3 % NCO, 20 min wird nachgerührt. Sonstige Aufarbeitung wie in Beispiel 1.

NH-Zahl (HC10₄) : 42,6 mg KOH/g

Beispiel 16

In diesem Beispiel wird ein NCO-Prepolymer aus einem Polyester der OH-Zahl 50 und Toluylen-2,4-diisocyanat im NCO:OH-Verhältnis 2:1 des NCO-Gehaltes 3,19 % verwendet. Der verwendete Polyester besteht aus Adipinsäure und Hexandiol-1,6 und wurde bei einem Molverhältnis von ≈1:1 hergestellt.

Vorgelegt und unter Rühren auf 90°C erhitzt wird ein Gemisch aus 4,4 l DMF, 100 g Wasser und 0,2 g NaOH. Unter Rühren werden innerhalb von 45 min 2 kg des obigen NCO-Prepolymers - (60°C warm) zugegeben. Aufarbeitung wie in Beispiel 1.

NH-Zahl (HClO₄) : 43,5 mg KOH/g

NH-Zahl (Ac₂O/Py) : 43,85 mg KOH/g

S-Zahl (Ac₂O/Py) : 0,4 mg KOH/g

TDA-Gehalt (HPLC) : 0,81 %

Beispiel 17

In diesem Beispiel wird ein NCO-Prepolymer des NCO-Gehalts 2,34 % aus einem Polyester und Toluylen-2,4-diisocyanat im NCO:OH-Verhältnis 2:1 verwendet. Der Polyester besteht aus Adipinsäure und Diethylenglykol und hat eine OH-Zahl von 41.

Vorgelegt wird ein 90°C heißes Gemisch aus 1,75 l DMF, 0,05 g NaOH und 50 ml Wasser. Innerhalb von 30 min werden unter Rühren 500 g des obigen Prepolymers zugegeben. Aufarbeitung wie in Beispiel 1.

NH-Zahl (HClO₄) : 28,05 mg KOH/g

TDA-Gehalt (HPLC) : 0,206 %

Beispiel 18

In diesem Beispiel wird ein gedünnschichtetes NCO-Prepolymer des NCO-Gehalts 3,4 % aus einem Polyethergemisch und Toluylen-2,4-diisocyanat verwendet. Das Gemisch hat eine OH-Zahl von 50 und eine Funktionalität von 2,5 und besteht aus einem 1:1-Gemisch aus einem auf Trimethylolpropan und einem auf Propylenglykol gestarteten PO/EO-Polyether.

Vorgelegt wird ein 90°C heißes Gemisch aus 3,5 l DMF, 0,1 g NaOH und 100 ml Wasser. Innerhalb von 40 min werden unter Rühren 1000 g des obigen Prepolymers zugegeben. Aufarbeitung wie in Beispiel 1.

NH-Zahl (HClO₄) : 44,3 mg KOH/g

NH-Zahl (Ac₂O/Py) : 43,5 mg KOH/g

S-Zahl (Ac₂O/Py) : 0,3 mg KOH/g

TDA-Gehalt (HPLC) : 0,087 %

Beispiel 19

In diesem Beispiel wird eine durch 3-stündiges Rühren bei 80°C erhaltenes Prepolymer des NCO-Gehaltes 3,1 % von Polytetramethylenglykol der OH-Zahl 56 und Toluylen-2,4-diisocyanat mit NCO:OH-Verhältnis 2:1 verwendet.

Vorgelegt wird ein 90°C heißes Gemisch aus 1,75 l DMF, 0,05 g NaOH und 50 ml Wasser. Innerhalb 20 min zugegeben wurden 500 g des obigen Prepolymers. Aufarbeitung wie in Beispiel 1.

NH-Zahl (HClO₄) : 39,5 mg KOH/g

TDA-Gehalt (HPLC) : 0,281 :

Beispiel 20

In diesem Beispiel wird ein durch 4-stündiges Rühren bei 80°C erhaltenes Prepolymer des NCO-Gehaltes 2,8 % (aus einem Ester der OH-Zahl 56 (wie Beispiel 9) und Diphenylmethan-4,4'-diisocyanat im NCO:OH-Verhältnis 2:1) verwendet.

Vorgelegt wird ein 90°C heißes Gemisch aus 1,75 l DMF, 0,05 g NaOH und 50 g Wasser. Innerhalb von 35 min zugegeben wird eine frisch bereitete Mischung aus 500 g des obigen Prepolymers und 200 g DMF. Aufarbeitung wie in Beispiel 1.

NH-Zahl (HClO₄) : 31,4 mg KOH/g

NH-Zahl (Ac₂O/Py) : 29,25 mg KOH/g

S-Zahl (Ac₂O/Py) : 0,2 mg KOH/g

MDA-4,4' -Gehalt (HPLC) : 1,48 %

Beispiel 21

In diesem Beispiel wird ein durch 4 h-Rühren bei 80°C erhaltenes Prepolymer des NCO-Gehaltes 1,87 % aus einem Polyetherdiol der OH-Zahl 28 (erhalten durch blockweise Addition von 80 % Propylenoxid und dann 20 Gew.-% Ethylenoxid an Propylenglykol) und Tolylen-2,4-diisocyanat im NCO:OH-Verhältnis von 2:1 verwendet.

Vorgelegt wird ein 90°C heißes Gemisch aus 1,75 l DMF, 0,05 g NaOH und 50 ml Wasser. Zugegeben werden in 30 min 500 g des obigen Prepolymers. Aufarbeitung wie in Beispiel 1.

NH-Zahl (HClO₄) : 23,7 mg KOH/g

Beispiel 22

In diesem Beispiel wird ein durch 3-stündiges Rühren bei 80°C erhaltenes NCO:OH-2:1 Prepolymer aus einem Polyethertriol der OH-Zahl 28, erhalten durch Addition von zuerst 87 Gew.-% Propylenoxid und dann 13 Gew.-% Ethylenoxid an Trimethylolpropan, des NCO-Gehaltes 1,8 % verwendet.

Vorgelegt wird ein auf 90°C erhitztes Gemisch aus 1,75 l DMF, 0,05 g NaOH und 50 ml Wasser - (12,9 Mol Wasser pro NCO-Äquivalent; DMF/$H_2$O-Verhältnis = 33,2:1). Zugegeben werden in 30 min 500 g des obigen NCO-Prepolymers. Aufarbeitung wie in Beispiel 1.

NH-Zahl (HC10$_4$) : 25,15 mg KOH/g

NH-Zahl (Ac$_2$O/Py) : 24,0 mg KOH/g

S-Zahl (Ac$_2$O/Py) : 0,2 mg KOH/g

Beispiele 23-25

In diesen Beispiel wird die gute Wirksamkeit von Natriumaluminat demonstriert.

Beispiel 23

Vorgelegt wird bei 90°C eine Mischung aus 1750 ml DMF, 50 g Wasser und 0,1 g Natriumaluminat. Unter Rühren werden 500 g des NCO-Prepolymers aus Beispiel 1 mit 3,65 % NCO zugegeben (Verhältnis $H_2$O:NCO ca. 6,4:1). Durchführung und Aufarbeitung wie in Beispiel 1.

NH-Zahl (HC10$_4$) : 51,6 mg KOH/g

NH-Zahl (Ac$_2$O/Py) : 51,5 mg KOH/g

S-Zahl (Ac$_2$O/Py) : 0,1 mg KOH/g

TDA-Gehalt (HPLC) : 0,81 %

Beispiel 24

Vorgelegt wird eine 90°C heiße Mischung aus 1100 g DMF, 25 g Wasser und 0,01 g Natriumaluminat. Unter Rühren werden innerhalb von 20 min 500 g des NCO-Prepolymers aus Beispiel 4 mit 3,3 % NCO zugegeben (Verhältnis $H_2$O:NCO = ca. 3,5:1). Durchführung und Aufarbeitung wie in Beispiel 1.

NH-Zahl (HC10$_4$) : 47,15 mg KOH/g

Beispiel 25

Vorgelegt wird eine 90°C heiße Mischung aus 1100 g DMF, 25 g Wasser und 0,05 g Natriumaluminat. Unter Rühren werden 500 g eines NCO-Prepolymers, das wie das NCO-Prepolymer aus Beispiel 1 hergestellt wurde, jecoch einen NCO-Gehalt von 3,2 % aufweist, zugegeben (Verhältnis $H_2$O:NCO = 3,65:1). Durchführung und Aufarbeitung wie in Beispiel 1.

NH-Zahl (HC10$_4$) : 41,7 mg KOH/g

Beispiel 26

Vorgelegt wird bei 90°C ein Gemisch aus 1,75 l DMF, 50 g Wasser und 2,5 g KHCO$_3$ (0,5 Gew.-%, bezogen auf NCO-Prepolymer; DMF/Wasser-Gewichtsverhältnis = 33,2:1; 7,05 Mol Wasser pro NCO). Innerhalb von 20 min werden 500 g des NCO-Prepolymers aus Beispiel 4 mit 3,3 % NCO zugegeben. Aufarbeitung wie in Beispiel 1.

NH-Zahl (HC10$_4$) : 47,3 mg KOH/g

Beispiele 27-28

In diesen Beispielen wird gezeigt, daß die Mitverwendung erhöhter Mengen Wasser zu - schlechteren Ergebnissen, d.h. zu niedrigeren NH-Zahlen infolge niedrigerer NCO/NH$_2$-Konversionsraten, führt.

Beispiel 27

Vorgelegt wird bei 90°C ein Gemisch aus 1,5 l DMF, 250 ml Wasser (32,32 Mol Wasser/NCO-Äquivalent; DMF/Wasser-Verhältnis = 5,9:1) und 0,05 g KHCO$_2$ (0,01 Gew.-%, bezogen auf Prepolymer). Innerhalb von 20 min werden 500 g des NCO-Prepolymers aus Beispiel 1 mit 3,6 % NCO zugegeben. Aufarbeitung wie in Beispiel 1.

NH-Zahl (HC10$_4$) : 37,8 mg KOH/g

NH-Zahl (Ac$_2$O/Py) : 38,95 mg KOH/g

S-Zahl (Ac$_2$O/Py) : 0,1 mg KOH/g

Beispiel 28

Vorgelegt wird ein 90°C heißes Gemisch aus 1,5 l DMF, 250 ml Wasser (DMF/$H_2$O)-Verhältnis = 5,9:1) und 0,05 g Natriumformiat. Innerhalb von 20 min werden 500 g des Prepolymers aus Beispiel 4 mit 3,3 % NCO zugegeben. Aufarbeitung wie in Beispiel 1.

NH-Zahl (HC10$_4$) : 33,7 mg kOH/g

Beispiel 29

Vorgelegt wird bei 90°C ein Gemisch aus 1,75 l DMF, 50 g Wasser und 0,24 g Natriumformiat - (HCO₂Na). Unter Rühren werden 500 g des NCO-Prepolymers aus Beispiel 1 zugegeben und wie in Beispiel 1 beschrieben weitergearbeitet.

NH-Zahl (HC10₄) : 50,5 mg KOH/g

NH-Zahl (Ac₂O/Py) : 48,4 mg KOH/g

S-Zahl (Ac₂O/Py) : 0,1 mg KOH/g

Beispiele 30 -40

In diesen Beispielen werden NCO-Prepolymere eingesetzt, die durch 4 h-Rühren bei 80°C eines Gemisches von Toluylen-2,4-diisocyanat und einem auf Trimethylolpropan gestarteten Polyoxypropylenglykol der OH-Zahl 32 entstehen. In den Beispielen 30 bis 33 wird ein Produkt mit einem NCO-Gehalt von 2,1 %, in den Beispielen 34 bis 36, 38, 39 von 2,3 und in Beispiel 37 sowie 40 von 2,2 % verwendet.

Beispiel 30

Vorgelegt wird unter Rühren bei 90°C ein Gemisch aus 1,1 l DMF, 25 ml Wasser und 0,025 g NaOH. Unter Rühren werden bei dieser Innentemperatur 500 g eines wie oben beschriebenen Prepolymers des NCO-Gehalts 2,1 % zugegeben und wie in Beispiel 1 weiter-und aufgearbeitet.

NH-Zahl (HC10₄) : 30,8 mg KOH/g

NH-Zahl (Ac₂O/Py) : 34,0 mg KOH/g

S-Zahl (Ac₂O/Py) : 0,05 mg KOH/g

Beispiel 31

Vorgelegt wird unter Rühren bei 90°C ein Gemisch aus 1,1 l DMF, 25 ml Wasser und 0,01 g NaOH. Unter Rühren werden bei dieser Innentemperatur 500 g des NCO-Prepolymers aus Beispiel 30 zugegeben und wie in Beispiel 1 weiter-und aufgearbeitet.

NH-Zahl (HC10₄) : 29,8 mg KOH/g

NH-Zahl (Ac₂O/Py) : 33,5 mg KOH/g

S-Zahl (Ac₂O/Py) : 0,05 mg KOH/g

Beispiel 32

Vorgelegt wird unter Rühren bei 90°C ein Gemisch aus 1,1 l DMF, 25 ml Wasser und 0,005 g NaOH. Unter Rühren werden bei dieser Innentemperatur 500 g des NCO-Prepolymers aus Beispiel 30 zugegeben und wie in Beispiel 1 weiter-und aufgearbeitet.

NH-Zahl (HC10₄) : 31,1 mg KOH/g

NH-Zahl (Ac₂O/Py) : 32,1 mg KOH/g

S-Zahl (Ac₂O/Py) : 0,05 mg KOH/g

Beispiel 33

Vorgelegt wird unter Rühren bei 90°C ein Gemisch aus 1,1 l DMF, 25 ml Wasser und 0,0025 g NaOH (0,0005 Gew.-%, bezogen auf Prepolymer). Unter Rühren werden bei dieser Temperatur 500 g des NCO-Prepolymers aus Beispiel 30 zugegeben und wie in Beispiel 1 weiter-und aufgearbeitet.

NH-Zahl (HC10₄) : 29,4 mg KOH/g

NH-Zahl (Ac₂O/Py) : 28,6 mg KOH/g

S-Zahl (Ac₂O/Py) : 0,05 mg KOH/g

Praktisch die selben Ergebnisse erhält man bei Verwendung von 0,0025 g KOH.

Beispiel 34

Vorgelegt wird unter Rühren bei 90°C ein Gemisch aus 1,1 l DMF, 25 ml Wasser und 0,005 g KOH. Unter Rühren werden bei 90°C 500 g eines wie oben beschriebenen Prepolymers, jedoch mit dem NCO-Gehalt von 2,3 %, zugegeben und wie in Beispiel 1 weiter-und aufgearbeitet.

NH-Zahl (HC10₄) : 29,2 mg KOH/g

Beispiel 35

Vorgelegt wird unter Rühren bei 45°C ein Gemisch aus 1,1 l DMF, 25 ml Wasser und 0,0025 g NaOH. Unter Rühren werden bei dieser Innentemperatur 500 g des NCO-Prepolymers aus Beispiel 34 zugegeben, jedoch 20 min nachgerührt - (Ende der CO₂)-Entwicklung). Aufgearbeitet wird wie in Beispiel 1.

NH-Zahl (HC10₄) : 19,6 mg KOH/g

Beispiel 36

Vorgelegt wird unter Rühren bei 45°C ein Gemisch aus 1,1 l DMF, 25 ml Wasser und 0,1 g NaOH. Unter Rühren werden bei dieser Innentemperatur 500 g des NCO-Prepolymers aus Beispiel 34 zugegeben. 25 min wird nachgerührt, wobei nach 5 min bereits eine Probe gezogen wird. Beide Proben werden wie in Beispiel 1 aufgearbeitet.

NH-Zahl (HC10₄, nach 5 min) : 29,4 mg KOH/g

NH-Zahl (HC10₄, nach 25 min) : 29,0 mg KOH/g

Dies zeigt, daß auch bei 45°C die Reaktion spätestens 5 min nach Beendigung der Zugabe beendet ist, und daß längeres Nachrühren keine Vorteile bringt.

Beispiel 37

Vorgelegt wird unter Rühren bei 45°C ein Gemisch aus 1,1 l DMF, 25 ml Wasser und 0,05 g KOH. Unter Rühren werden bei dieser Temperatur 500 g des NCO-Prepolymers wie oben beschrieben, jedoch mit 2,2 % NCO, zugegeben. Weiter-und Aufarbeitung wie in Beispiel 1.

NH-Zahl (HC10₄) : 29,0 mg KOH/g.

Beispiel 38

Vorgelegt wird unter Rühren bei 90°C ein Gemisch aus 1,1 l DMF und 25 ml Wasser. Unter Rühren werden bei dieser Innentemperatur 500 g des NCO-Prepolymers aus Beispiel 34 zugegeben. Aufarbeitung wie in Beispiel 1.

NH-Zahl (HC10₄) : 17,5 mg KOH/g

Wird dieser Reaktionsansatz nach Beendigung der Zugabe noch mit 0,2 g 1/10n-NaOH versetzt und 45 min bei 90°C gerührt, so wird nach Aufarbeitung wie in Beispiel 1 ein Produkt mit einer NH-Zahl von 17,8 mg KOH/g (HC10₄-Methode) erhalten. Dies zeigt, daß auch bei Abwesenheit eines Katalysators die Reaktion spätestens 5 min nach Beendigung der Zugabe des NCO-Prepolymers beendet ist.

Beispiel 39

Vorgelegt wird bei einer Innentemperatur von 137°C (Rückfluß) unter Rühren eine Mischung aus 1,1 l DMF und 25 ml Wasser. Innerhalb von 27 min erfolgt Zugabe von 500 g des NCO-Prepolymers aus Beispiel 34, wobei die Innentemperatur auf 130°C sinkt (Bad-T. 160-180°C) und der Rückfluß versiegt.

Wird nach 5 min Nachrührzeit unter Rückfluß aufgearbeitet, wird ein Produkt mit einer NH-Zahl - (HC10₄) von 20,7 mg KOH/g erhalten.

Wird nach 30 min Nachrührzeit unter Rückfluß aufgearbeitet, wird ein Produkt mit einer NH-Zahl - (HC10₄) von 21,3 mg KOH/g erhalten.

Dies zeigt, daß auch ohne Katalysator und bei dieser Temperatur die Reaktion spätestens 5 min nach Beendigung der Zugabe des NCO-Prepolymers beendet ist.

Beispiel 38 und 39 demonstrieren auch, daß ohne Mitverwendung eines Katalysators zwar ein Produkt erhalten wird, das einem ohne Verwendung eines Katalysators nach DE 32 23 398 hergestellten Produkt überlegen ist, das jedoch ein hohes Maß an Vorverlängerung (Harnstoff-Bildung) aufweist.

Beispiel 40 (Vergleichsbeispiel zu Beispiel 38)

Vorgelegt und auf 90°C aufgeheizt wird unter Rühren ein Gemisch aus 1,1 1 DMF und 300 ml Wasser. Unter Rühren wurde innerhalb von 20 min 500 g des NCO-Prepolymers aus Beispiel 37 zugegeben. Dabei fällt ein gelartiges Polymer aus, das sich auch in reinem DMF oder Esssigsäure nicht mehr löst. Versucht man, eine NH-Zahl des unlöslichen Materials zu bestimmen, so erhält man (2 mg KOH/g als NH-Zahl.

Dieser Versuch zeigt, daß Wasser/Lösungsmittel (bzw. Wasser/DMF-)Verhältnisse, wie sie in den DE 32 23 398 und 32 23 397 verwendet wurden, ungünstigere Ergebnisse ergeben als beim erfindungsgemäßen Verfahren. Das heißt, wo beim bekannten Verfahren ein praktisch überhaupt nicht mehr brauchbares Produkt resultierte, ergibt das erfindungsgemäße Verfahren noch brauchbare, flüssige und lösliche Produkte mit respektabler NCO-NH₂-Konversion und beachtlichen NH-Zahlen.

Beispiel 41

616 ml DMF und 14 ml H₂O werden in einem 1,3 1-Autoklaven vorgelegt und auf 150°C erhitzt. Unter Rühren werden dann 280 g eines NCO-Prepolymers, wie es auch in Beispiel 37 verwendet wurde, innerhalb von 5 min mit einer Dosierpumpe zugegeben. Die Temperatur des NCO-Prepolymers betrug 50°C. Es wurden 5 min bei 150°C nachgerührt, dann abgekühlt, entspannt und das Lösungsmittel wie in Beispiel 1 abdestilliet. Es wird ein braunes Material mit folgenden Daten erhalten:

NH-Zahl (HC10₄) : 28,9 mg KOH/g

NH-Zahl (Ac₂O/Py) : 27,1 mg KOH/g

S-Zahl: <0,05 mg KOH/g

Molmassen: 3825, th. 3851 (dampfdruckosmometrisch bestimmt)

TDA-Gehalt: 0,288 Gew.-%

Beispiel 42 (Vergleichsbeispiel)

600 ml Wasser werden in einem 1,3 1-Autoklaven auf 150°C erhitzt und dann innerhalb von 10 min 300 g des NCO-Prepolymers aus Beispiel 37, das auf 50°C erwärmt wurde, zugegeben. 5 min wurde bei 150°C weitergerührt, dann abgekühlt, entspannt und das Wasser von entstandenem, zähen Gummi abdekantiert, der jedoch bei 80°C in einem DMF/Ethanol-Gemisch noch teilweise gelöst werden konnte.

Die NH-Zahl des noch löslichen Teils betrug - (nach Abdestillation des Lösungsmittels) 11,1 mg KOH/g (HC1O₄).

Beispiel 43 (Vergleichsbeispiel)

Wiederholt man obigen Versuch, fügt dem Wasser jedoch 0,06 g KOH zu, so wird nach Aufarbeitung ein verquelltes, in DMF total unlösliches Material erhalten. Eine NH-Zahl kann nicht bestimmt werden.

Beispiel 44

a) Prepolymerherstellung

1218 g Toluylendiisocyanat (7 mol) werden auf 60°C erwärmt. Innerhalb von 40 min werden 90 g Butandiol-1,4, zugegeben. Gegen Ende der Reaktion fällt das Reaktionsprodukt aus. Es wird 1 Stunde bei 60°C nachgerührt. Das breiartige Gemisch wird bei 23°C mit 2 1 Cyclohexan verdünnt und abgesaugt, mit Cyclohexan und Petrolether gewaschen und bei 40°C im Vakuumtrockenschrank getrocknet. Das Produkt schmolz bei 130 bis 131°C und hatte einen NCO-Gehalt von 19,0 % (für ein 2:1-Addukt würden 19,2 % NCO berechnet).

b) Polyaminherstellung

Vorgelegt wird ein Gemisch aus 3256 ml DMF, 0,15 g KOH und 74 ml Wasser. Unter Rühren wird bei 90°C eine Aufschlämmung von 310 g des obigen NCO-Prepolymers in 600 ml DMF innerhalb von 20 min zugegeben. Es wird eine Entwicklung von 31 l CO₂ beobachtet (theoretisch 31,4 l). Das Lösungsmittel wird dann weitgehend abdestilliert und aus dem flüssigen Rückstand das Produkt mit einem 10:1-Gemisch aus Wasser und Methanol ausgefällt. Das Produkt wird abgesaugt, mit Wasser gewaschen und getrocknet.

NH-Zahl (Ac₂O/Py) : 274 mg KOH/g (Th.: 288)

Säure-Zahl (Ac₂O/Py) : 0,4 mg KOH/g

Molmasse (Dampfdruckosmometrie) : 395; 400 - (Th.: 378)

TDA-Wert (HPLC) : 0,352 %

NH-Zahl (HC1O₄) : 264 mg KOH/g; Schmp.: 168-169°C

Beispiel 45

Vorgelegt wird ein Gemisch aus 1750 ml Dimethylformamid und 30 ml Wasser sowie 0,01 g Kaliumoctat (0,002 Gew.-%, bezogen auf NCO-Prepolymer). Das Gemisch wird auf 90°C erwärmt. Innerhalb von 20 Minuten werden 500 g des auf 70°C erwärmten NCO-Prepolymers von Beispiel 9 zugegeben und wie dort beschrieben aufgearbeitet. Das Polyamin hat eine NH-Zahl (Ac₂O/Py) von 47,95 mg KOH/g.

**Ansprüche**

1. Einstufen-Verfahren zur Herstellung von Polyaminen mit primären Aminogruppen durch Hydrolyse von NCO-Gruppen aufweisenden Verbindungen in Wasser enthaltenden Medien, gegebenenfalls unter Zusatz von basischen und/oder Metall-Katalysatoren, dadurch gekennzeichnet, daß man

a) NCO-Gruppen, vorzugsweise aromatisch gebundenen NCO-Gruppen aufweisende Verbindungen mit NCO-Gehalt von 0,5 bis 40 Gew.-%, vorzugsweise NCO-Prepolymeren mit einem NCO-Gehalt von 1,2 bis 25 Gew.-% oder modifizierten Polyisocyanaten mit einem NCO-Gehalt von 1,5 bis 20,5 Gew.-%,

b) mit 0,75 bis 50, bevorzugt 1 bis 35, besonders 1,25 bis 12 und besonders bevorzugt mit 1,5 bis 7,5 Mol Wasser pro Äquivalent NCO der Komponente a),

c) in Gegenwart von 0 bis 1 Gew.-%, vorzugsweise 0,00005 bis 1 Gew.-%, basischer, nicht einbaufähiger und/oder Metall-Katalysatoren, besonders bevorzugt 0,0001 bis 0,099 Gew.-% bezogen auf 100 Gew.-% der Komponente a), basischer Katalysatoren,

d) und in Gegenwart von ≥ 10 Gew.-%, bezogen auf 100 Gew.-% der Komponente a) von Carbonsäure amiden als Lösungsmittels, vorzugsweise Carbonsäuredialkylamiden, besonders bevorzugt Dimethylformamid oder Dimethylacetamid,

e) und gegebenenfalls in Gegenwart von 0,1 bis 5 Gew.-%,bezogen auf 100 Gew.-% der Komponente a), einer Verbindung mit mindestens einer, an aliphatische, cycloaliphatische oder aromatische Reste gebundenen Hydroxy-und/oder Amino-und/oder Thiolgruppe,

wobei

f) ein Lösungsmittel (d)/Wasser-Gewichtsverhältnis von 3 bis 200, bevorzugt 5 bis 150, besonders bevorzugt ≥ 10 bis100 und insbesondere ≥ 25 bis 75,

g) und eine homogene Reaktionsphase aufrecht erhalten werden,

bei einer Temperatur von 20 bis 210°C, bevorzugt 40 bis 150°C, hydrolysiert.

2. Verfahren nach Anspruch 1, dadurch gekennzeichnet, daß man als Katalysatoren c)

cα) 0,0001 bis 0,099, vorzugsweise 0,002 bis 0,08 Gew.-%, bezogen auf 100 Gew.-% der NCO-Komponente a), Alkalihydroxide, Erdalkalihydroxide, Tetraalkylammoniumhydroxide, Alkalialuminate, Alkaliphenolate, Alkali-thiophenolate, Alkalimercaptide, Alkalihydrogensulfide, löslichen Alkali-und Erdalkalisalze der (Iso)(Thio)cyansäuren und Alkali-β-diketon-enolate

und/oder

cβ) 0,0001 bis 0,099, vorzugsweise 0,002 bis 0,08 Gew.-%, bezogen auf 100 Gew.-% der NCO-Komponente a), Carbonate oder Hydrogencarbonate von Alkalimetallen

und/oder

cγ) 0,0001 bis 0,099, vorzugsweise 0,0002 bis 0,008 Gew.-% Alkali-und Erdalkalisalze von organischen Carbonsäuren

einsetzt.

3. Verfahren nach Anspruch 1 oder 2, dadurch gekennzeichnet, daß man die Komponente b) in Mengen von 1,25 bis 12, vorzugsweise 1,5 bis 7,5 Mol pro Mol NCO-Äquivalent einsetzt und dabei ein Carbonsäuredialkylamid/Wasser (vorzugsweise Dimethylformamid/Wasser)-Gewichtsverhältnis von ≥10 bis 100, bevorzugt ≥25 bis 75 aufrechterhält.

4. Verfahren nach Anspruch 1, dadurch gekennzeichnet, daß man die NCO-Komponente a) in Gegenwart von

cδ) 0,0001 bis 0,99 Gew.-%, vorzugsweise 0,001 bis 0,099 Gew.-% tertiären Aminverbindungen, bezogen auf 100 Gew.-% NCO-Komponente a), als basischen Katalysatoren c)

unter Einhaltung eines Wasser/NCO-Verhältnisses von 1 bis 7,5 Mol Wasser pro Äquivalent NCO

und eines Dialkylcarbonsäureamid/Wasser-(vorzugsweise Dimethylformamid/Wasser) Gewichtsverhältnisses von ≥10 bis 100, vorzugsweise ≥25 bis 75, bei einer Temperaturen von 35 bis 165°C,

hydrolysiert.

5. Verfahren nach Anspruch1, dadurch gekennzeichnet, daß man die NCO-Komponente a) in Gegenwart von 0,001 bis 0,099 Gew.-Teilen tertiärer Aminverbindung unter Einhaltung eines Wasser/NCO-Verhältnisses von 1 bis 24 Mol Wasser pro Äquivalent NCO und eines Dialkylcarbonsäureamid/Wasser-(bevorzugt Dimethylformamid/Wasser)-Gewichtsverhältnisses von ≥10 bis 50, bei einer Temperatur von 35 bis 165°C, hydrolysiert.

6. Verfahren nach Anspruch 1, dadurch gekennzeichnet, daß man die NCO-Komponente a)

cε) in Gegenwart von 0,0001 bis 0,0099, vorzugsweise 0,002 bis 0,008 Gew.-%, bezogen auf 100 Gew.-% der Komponente a), Metallkatalysatoren,

b) mit 1,5 bis 7,5 Molen Wasser pro NCO-Äquivalent

d) und unter Einhaltung eines Carbonsäuredialkylamid/Wasser-(vorzugsweise Dimethylformamid/Wasser)-Gewichtsverhältnisses von ≥10 bis 50, vorzugsweise ≥25 bis 50, bei Temperaturen von 35 bis 165°C hydrolisiert.

7. Verfahren nach Anspruch 1, dadurch gekennzeichnet, daß man die NCO-Komponente a)

ohne Katalysator c)

bei einem Wasser/NCO-Verhältnis von 1 bis 25 Mol Wasser/Äquivalent NCO

und einem Carbonsäuredialkylamid/Wasser-(vorzugsweise Dimethylformamid/Wasser) - Gewichtsverhältnis von ≥10 bis 75, bevorzugt ≥25 bis 50,

bei Temperaturen von 35 bis 165°C, gegebenenfalls unter Druck, hydrolysiert.

8. Verfahren nach Ansprüchen 1 bis 7, dadurch gekennzeichnet, daß man als NCO-Komponente a) NCO-Prepolymere mit einem NCO-Gehalt von 1,5 bis 10 Gew.-% oder Urethan-modifizierte Polyisocyanate mit einem NCO-Gehalt von 1,5 bis 20,5 Gew.-%, vorzugsweise 5 bis 20,5 Gew.-% einsetzt.

9. Polyamine vorzugsweise mit 0,46 bis 9,52 Gew.-% primärer NH$_2$-Gruppen, erhalten nach Ansprüchen 1 bis 8.

10. Verfahren zur Herstellung von gegebenenfalls zellförmigen Polyurethan(harnstoff)en durch Umsetzung von

Polyisocyanaten, gegebenenfalls

weiteren Verbindungen mit gegenüber Isocyanaten reaktiven Gruppen, gegebenenfalls

in Anwesenheit an sich bekannter Hilf-und Zusatzstoffe und/oder Lösungsmittel und Polyaminen, dadurch gekennzeichnet, daß als Polyamine Polyamine nach Anspruch 9 eingesetzt werden.